(19) Europäisches Patentamt
European Patent Office
Office européen des brevets

(11) **EP 3 269 762 B1**

(12) **EUROPEAN PATENT SPECIFICATION**

(45) Date of publication and mention
of the grant of the patent:
**23.12.2020 Bulletin 2020/52**

(51) Int Cl.:
*C08J 9/18* (2006.01)        *C08J 9/232* (2006.01)
*C08L 23/04* (2006.01)        *C08J 9/12* (2006.01)

(21) Application number: **16764606.6**

(86) International application number:
**PCT/JP2016/054339**

(22) Date of filing: **15.02.2016**

(87) International publication number:
**WO 2016/147775 (22.09.2016 Gazette 2016/38)**

(54) **POLYETHYLENE RESIN FOAM PARTICLES HAVING ANTISTATIC PERFORMANCE, AND POLYETHYLENE RESIN IN-MOLD FOAM-MOLDED ARTICLE AND METHOD FOR MANUFACTURING SAME**

POLYETHYLENHARZ-SCHAUMSTOFFPARTIKEL MIT ANTISTATISCHEN EIGENSCHAFTEN UND GEFORMTER POLYETHYLENHARZ-SCHAUMSTOFFARTIKEL SOWIE VERFAHREN ZU DEREN HERSTELLUNG

PARTICULES EN MOUSSE DE RÉSINE POLYÉTHYLÈNE AYANT DES PROPRIÉTÉS ANTISTATIQUES, ARTICLE MOULÉ EN MOUSSE À BASE DE RÉSINE POLYÉTHYLÈNE ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2015 JP 2015051442**
**13.03.2015 JP 2015051423**

(43) Date of publication of application:
**17.01.2018 Bulletin 2018/03**

(73) Proprietor: **Kaneka Corporation**
**Osaka-shi, Osaka 530-8288 (JP)**

(72) Inventor: **ITOI, Akihiro**
**Settsu-shi**
**Osaka 566-0072 (JP)**

(74) Representative: **Vossius & Partner**
**Patentanwälte Rechtsanwälte mbB**
**Siebertstrasse 3**
**81675 München (DE)**

(56) References cited:
**EP-A1- 2 733 164        WO-A1-2009/051035**
**WO-A1-2011/086937        WO-A1-2015/076306**
**WO-A1-2015/076306        JP-A- H11 209 503**
**JP-A- 2006 070 260**

• **DATABASE WPI Week 201454 Thomson Scientific, London, GB; AN 2014-P38400 XP002782371, -& JP 2014 141551 A (KANEKA CORP) 7 August 2014 (2014-08-07)**

**Description**

Technical Field

The present invention relates to expanded polyethylene resin particles and an in-mold foaming molded product of polyethylene resin which have an antistatic property, and to a method for producing the expanded polyethylene resin particles and a method for producing the in-mold foaming molded product of polyethylene resin.

Background Art

Expanded polyethylene resin molded products are used in various purposes as a buffer packing material and a heat insulating material, which are excellent in plasticity and heat insulating property. Among those, as a buffer packing material for a product such as an electronic component which should be protected from dust, an expanded polyethylene resin molded product having an antistatic property is used.

As a method for producing the expanded polyethylene resin molded product, in-mold foaming molding is known in which (i) a mold is filled with expanded polyethylene resin particles which have been obtained by foaming (beads foaming) polyethylene resin particles in advance with a foaming agent such as a butane gas and (ii) a heating medium such as steam is introduced so that the expanded polyethylene resin particles are fused to each other by heat. By using the expanded polyethylene resin particles containing an antistatic agent, it is possible to obtain an expanded polyethylene resin molded product having an antistatic property.

In the beads foaming of polyethylene resin, crosslinked polyethylene has been used because foam that is high in expanding ratio and is excellent in heat resistance can be easily obtained. However, it has been proposed that a molded product having good moldability can be produced even from non-crosslinked polyethylene that has good recyclability (see Patent Literatures 1 and 2).

In order to improve molding processability of expanded particles, Patent Literatures 3 and 4 disclose expanded particles in which a mixed resin of two or more kinds of polyethylene resins is used as a base resin. However, in those techniques, as compared with a case where a linear polyethylene resin is used, it is necessary to mix high pressure low density polyethylene which generally has a melting point of 120°C or lower, low heat resistance, low rigidity, and a branched chain. From these, heat resistance may decrease, and a mechanical property may decrease.

Further, Patent Literatures 5 and 8 disclose the inventions in which a molding processability range of expanded polyethylene resin particles can be broadened by using, as a base resin, a polyethylene resin which is obtained by subjecting a linear low density polyethylene resin to heating treatment (annealing) and has two endothermic peaks on a melting curve that is obtained by differential scanning calorimetry, a width between those two endothermic peaks being equal to or larger than a predetermined width.

The linear low density polyethylene is a copolymer of ethylene and $\alpha$-olefin, and a molecular chain which contains a larger amount of $\alpha$-olefin (i.e., comonomer) is more likely to become crystal whose melting temperature is low and crystallinity is low. Therefore, in order to broaden a peak width on the melting curve by heating treatment, a resin is demanded in which a distribution of amounts of comonomers is broad. In Patent Literature 8, it seems that the distribution of amounts of comonomers is broadened by mixing polyethylene resins having different densities.

Meanwhile, Patent Literature 5 discloses expanded particles which have good moldability and a broad condition range of molding process. In the expanded particles, as a base resin, a non-crosslinked polyethylene resin is used which has a part whose complex viscosity in melting is 0.06 kg·sec/cm² to 0.2 kg·sec/cm² across a temperature width of 5°C or more. As a method for obtaining the non-crosslinked polyethylene resin, a method is disclosed in which, as a base resin, a resin is used in which a linear polyethylene resin having a density of 0.940 g/cm³ or higher, high density polyethylene having a melt index (hereinafter, sometimes referred to as "MI") of 0.01 g/10 min to 0.5 g/10 min, and a linear low density polyethylene resin having a density of 0.920 g/cm³ or higher and 0.940 g/cm³ or lower and MI of 0.1 g/10 min to 10 g/10 min are blended.

However, in Patent Literature 5, it is necessary to blend a large amount of high density polyethylene that has a low MI and low flowability. From this, in granulation of resin particles which are a raw material of the expanded particles, an amount of processed resin may be restricted due to an increase in energy necessary for kneading and rise in pressure of an extruder, and this may lead to decrease in productivity.

In recent years, uniformity in polymerization is enhanced by development of a polymerization catalyst and the like, and it is becoming difficult to obtain a polyethylene resin having a broad distribution of amounts of comonomers. Moreover, in a case where a polyethylene resin in which an amount of comonomers is small is used to enhance crystallinity of the resin, an absolute amount of comonomers is decreased and therefore a distribution of comonomers in the resin is narrowed, and accordingly a peak width on the DSC curve obtained in the heating treatment is also narrowed. Under the circumstances, in a case where a polyethylene resin having high crystallinity and high rigidity is used to obtain expanded particles in order to improve mechanical strength and reduce a weight of foam, an open cell ratio of an in-mold foaming molded product is increased when a processing temperature is increased, and the like. As such, there have been problems that moldability is insufficient and a molding processability range is narrow. Therefore, there are cases which cannot employ the technique in which a peak width on a DSC curve is broadened in order to widen the molding processability range unlike Patent Literatures 5 and 8.

Moreover, with regard to expanded particles in which high density polyethylene is blended as in Patent Literature 5, it is becoming clear that there are cases where the expanded particles shrink and the molding processability range is narrowed, as compared with expanded particles which have two endothermic peaks on a melting curve obtained by differential scanning calorimetry and in which a width of those two endothermic peaks is equal to or larger than a predetermined width.

Moreover, as a foaming agent that has been conventionally used in this field, a volatile organic foaming agent has been used as in Patent Literatures 1 and 2 because expanded particles can be obtained at a high expanding ratio. However, from an increase in concern about an environmental problem, in recent years, an inorganic gas such as a carbonic acid gas (carbon dioxide) has been used as a foaming agent (see Patent Literatures 6 and 7). Therefore, even if a resin that is identical with the conventionally used resin is used, there are cases where a foaming property and molding processability vary.

For example, there have been cases as follows: that is, in a case where an inorganic gas is used and a heating temperature in molding process (in-mold foaming molding) is increased, an open cell ratio of a molded product is increased, and this leads to deterioration in appearance and physical properties of the molded product and to deformation such as a sink of the molded product. Further, in regard to those problems, there have been cases where deformation becomes apparent in expanded polyethylene resin particles containing an antistatic agent due to a plasticizing effect by the antistatic agent.

Further, Patent Literatures 9 through 11 also disclose that useful expanded polyethylene resin particles can be obtained by using, as a base resin, a polyethylene resin which has tow endothermic peaks on a melting curve obtained by differential scanning calorimetry. However, Patent Literatures 9 through 11 do not disclose a temperature range in molding process, and it is becoming clear that an effect is insufficient in a case where the temperature range in molding process is considered.

In addition, Patent Literature 12 discloses that a molding processability range of expanded polyethylene resin particles to be obtained can be improved by setting the peak temperature width to a predetermined value or more. However, there is a case where the molding processability range is not sufficiently improved only by setting the peak temperature width to the predetermined value or more, and it is becoming clear that usable polyethylene resin is limited in Patent Literature 12.

Citation List

[Patent Literature]

[Patent Literature 1]
Japanese Examined Patent Application Publication, Tokukouhei, No. 03-067106 (announcement date: October 21, 1991) (Japanese Patent No. 1696651)
[Patent Literature 2]
Japanese Examined Patent Application Publication, Tokukouhei, No. 06-086544 (announcement date: November 02, 1994) (Japanese Patent No. 2017449)
[Patent Literature 3]
Japanese Patent Application Publication, Tokukaihei, No. 09-025356 (publication date: January 28, 1997)
[Patent Literature 4]
Japanese Patent Application Publication, Tokukaihei, No. 06-157803 (publication date: June 07, 1994)
[Patent Literature 5]
Japanese Patent Application Publication, Tokukaihei, No. 06-316645 (publication date: November 15, 1994)
[Patent Literature 6]
Japanese Patent Application Publication, Tokukai, No. 2000-17079 (publication date: January 18, 2000)
[Patent Literature 7]
Japanese Patent Application Publication, Tokukai, No. 2010-59393 (publication date: March 18, 2010)
[Patent Literature 8]
Japanese Patent Application Publication, Tokukaihei, No. 07-216153 (publication date: August 15, 1995)
[Patent Literature 9]
Japanese Patent Application Publication, Tokukaihei, No. 09-104026 (publication date: April 22, 1997)

[Patent Literature 10]
International Publication No. 2011/086937 (publication date: January 14, 2011)
[Patent Literature 11]
International Publication No. 2013/011951 (publication date: January 24, 2013)
[Patent Literature 12]
Japanese Patent Application Publication, Tokukaihei, No. 06-001874 (publication date: January 11, 1994)

Further prior art that might be of interest is disclosed in WO 2015/076306 A1, in JP 2014 141551 A, and in EP 2733164 A1.

Summary of Invention

Technical Problem

An object of the present invention is to provide expanded polyethylene resin particles from which (i) it is possible to produce expanded particles without impairing productivity of resin particles which are a raw material of the expanded particles and (ii) it is possible to produce in-mold foaming molded product of polyethylene resin that has a wide temperature range in molding process, achieves good appearance of a molded product, has good physical properties, and has an antistatic property.

Solution to Problem

The inventors of the present invention carried out diligent study in order to attain the object and, as a result, have found the following: that is, by using expanded polyethylene resin particles which (i) have two melting peaks, i.e., a low temperature side melting peak and a high temperature side melting peak on a DSC curve that is obtained by differential scanning calorimetry and (ii) are obtained by foaming polyethylene resin particles which have a storage modulus of elasticity of 900 Pa or more and 5000 Pa or less at an angular frequency of 1 rad/sec in dynamic viscoelastic behavior measurement at 190°C, have a storage modulus of elasticity of 100000 Pa or less at an angular frequency of 100 rad/sec in dynamic viscoelastic behavior measurement at 190°C, and contain an antistatic agent, it is possible to obtain an in-mold foaming molded product in which the open cell ratio is little increased even in a case where the heating temperature in molding process is increased and which have good appearance and dimensional stability and have an antistatic property, without impairing productivity of resin particles. Based on this finding, the inventors have accomplished the present invention.

That is, the present invention includes the following features:

[1] Expanded polyethylene resin particles which have a low temperature side melting peak and a high temperature side melting peak on a differential scanning calorie (DSC) curve that is obtained by differential scanning calorimetry in which a temperature is increased from 20°C to 220°C at a heating rate of 10°C/min, in which:
the expanded polyethylene resin particles are obtainable by expanding polyethylene resin particles which

(i) contain an antistatic agent and an amount of an aliphatic alcohol which amount is 0.001 to 2 parts by weight relative to 100 parts by weight of a polyethylene resin as a base resin of the expanded polyethylene resin particles, (ii) have a storage modulus of elasticity of 900 Pa or more and 5000 Pa or less at an angular frequency of 1 rad/sec in dynamic viscoelastic behavior measurement at 190°C and (iii) have a storage modulus of elasticity of 100000 Pa or less at an angular frequency of 100 rad/sec in dynamic viscoelastic behavior measurement at 190°C;
wherein the base resin of the polyethylene resin particles is a mixed resin of (A) not less than 60% by weight and not more than 97% by weight of a polyethylene resin whose melt index is 1.2 g/10 min or more and 10 g/10 min or less and (B) not less than 3% by weight and not more than 40% by weight of a polyethylene resin whose melt index is 0.01 g/10 min or more and 0.3 g/10 min or less, a total of (A) and (B) being 100% by weight.

[2] The expanded polyethylene resin particles described in [1], in which:
a melt index of the polyethylene resin particles is 0.8 g/10 min or more and 3.0 g/10 min or less.
[3] The expanded polyethylene resin particles described in [1] or [2], in which a peak temperature width is 11°C or less, which is a difference in temperature between the low temperature side melting peak and the high temperature side melting peak on the DSC curve.
[4] The expanded polyethylene resin particles described in [3], in which, in a case where a temperature of the polyethylene resin particles is increased from 20°C to 220°C at a heating rate of 10°C/min, then the polyethylene resin particles are cooled to 10°C at a rate of 10°C/min, and subsequently the temperature of the polyethylene resin particles is increased to 220°C for a second time at the heating rate of 10°C/min, the polyethylene resin particles have a crystal melting heat q of 145 J/g or more, which is calculated with use of a differential scanning calorimeter from a DSC curve that is obtained when the temperature is increased for the second time, wherein the crystal melting heat is the total quantity of heat of endothermic obtained from the DSC curve in the second heating.

[5] The expanded polyethylene resin particles described in any one of [1] through [4], in which the antistatic agent contains at least one selected from the group consisting of a glycerin ester of fatty acid having 6 or more and 24 or less carbon atoms and an aliphatic ethanolamine compound.

[6] The expanded polyethylene resin particles described in any one of [1] through [5], in which the antistatic agent contains at least one selected from the group consisting of glyceryl stearate, hydroxyalkylethanolamine, stearyl diethanolamine monostearate, and stearyl diethanolamine.

[7] The expanded polyethylene resin particles described in any one of [1] through [6], in which a content of the antistatic agent is not less than 0.1 parts by weight and not more than 3 parts by weight, relative to 100 parts by weight of a polyethylene resin which is the base resin of the polyethylene resin particles.

[8] The expanded polyethylene resin particles described in any one of [1] through [7], further includes a hydrophilic compound by not less than 0.01 parts by weight and not more than 10 parts by weight, relative to 100 parts by weight of the base resin.

[9] An expanded polyethylene resin molded product which is obtainable by filling a mold with expanded polyethylene resin particles described in any one of [1] through [8] and then carrying out in-mold foaming molding.

[10] A method for producing expanded polyethylene resin particles described in any one of [1] through [8], including: a first-stage foaming step in which polyethylene resin particles, a foaming agent, and an aqueous dispersion medium are dispersed, then a resultant mixture is heated in a sealed container up to a temperature that is equal to or higher than a softening temperature of the polyethylene resin particles, then a pressure is applied to the resultant mixture, then the resultant mixture is released into a zone whose pressure is lower than an internal pressure of a sealed container, and thus the expanded polyethylene resin particles are produced.

[11] The method for producing the expanded polyethylene resin particles described in [10], in which the foaming agent is an inorganic gas and/or water.

[12] The method for producing the expanded polyethylene resin particles described in [11], in which the inorganic gas is a carbonic acid gas.

[13] A method for producing an expanded polyethylene resin molded product, in which the expanded polyethylene resin molded product is obtained by (i) filling a molding space, which is made up of two molds and can be closed but cannot be sealed, with expanded polyethylene resin particles recited in any one of claims 1 through 8 without carrying out pretreatment on the expanded polyethylene resin particles in advance and then (ii) heating the expanded polyethylene resin particles by a heating medium.

Advantageous Effects of Invention

According to the expanded polyethylene resin particles in an aspect of the present invention, it is possible to produce expanded particles without impairing productivity of resin particles which are a raw material of the expanded particles, and it is possible to obtain an in-mold foaming molded product in which the open cell ratio is hardly raised even in a case where the heating temperature in molding process is increased and which have good appearance and an antistatic property.

Brief Description of Drawings

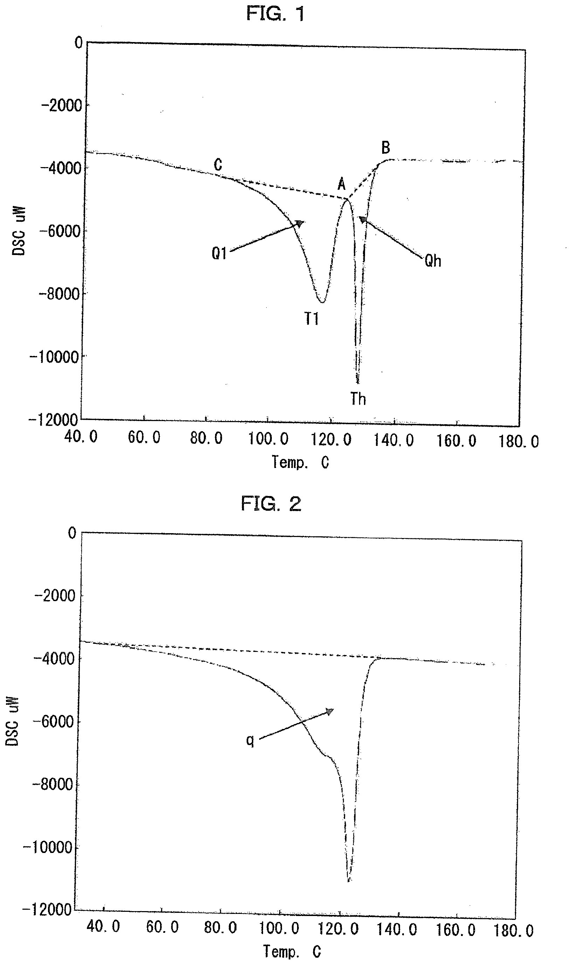

Fig. 1 shows an example of a differential scanning calorie (DSC) curve that is obtained, with differential scanning calorimetry, in a case where a temperature of expanded polyethylene resin particles in accordance with an aspect of the present invention is increased from 20°C to 220°C at a rate of 10°C/min. Here, a low temperature side melting peak temperature on the DSC curve is represented by Tl, and a high temperature side melting peak temperature on the DSC curve is represented by Th. Moreover, a point between the low temperature side melting peak and the high temperature side melting peak on the DSC curve, at which point a heat absorption becomes smallest, is indicated by A, a contact point is indicated by B at which the DSC curve makes contact with a tangent from the point A on the high temperature side, and a contact point is indicated by C at which the DSC curve makes contact with a tangent from the point A on the low temperature side. In this case, a part surrounded by a line segment (A-B) and the DSC curve is defined as a quantity of heat (Qh) of the high temperature side melting peak, and a part surrounded by a line segment (A-C) and the DSC curve is defined as a quantity of heat (Ql) of the low temperature side melting peak.

Fig. 2 shows an example of a differential scanning calorie (DSC) curve that is obtained, with differential scanning calorimetry, at a second temperature rise in the following case: that is, in a case where a temperature of the polyethylene resin particles in accordance with an aspect of the present invention is increased from 20°C to 220°C at a heating rate of 10°C/min and then cooled to 10°C at a rate of 10°C/min, and subsequently the temperature of the polyethylene resin particles is increased to 220°C again at the heating rate of 10°C/min. Here, a part surrounded by a dotted base line and the DSC curve is defined as a crystal melting heat (q).

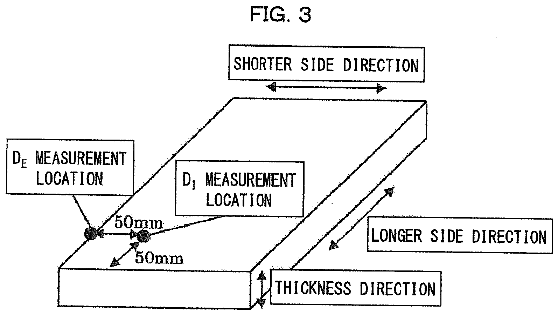

Fig. 3 is an external view illustrating directions (longer side, shorter side, thickness) of a foamed molded product obtained by subjecting the expanded polyethylene resin particles in accordance with an aspect of the present invention to in-mold foaming molding. Here, a thickness of an end part of the foam is represented by $D_E$, and a thickness of an inner part, at which a sink is more likely to occur and which is at a location that is 50 mm apart from a longer side edge and 50 mm apart from a shorter side edge of the foamed molded product, is represented by $D_I$.

Description of Embodiments

In a case where the expanded polyethylene resin particles in accordance with an aspect of the present invention are produced, first, polyethylene resin particles are produced which contain an antistatic agent and contain a polyethylene resin as a base resin.

The polyethylene resin particles in accordance with an aspect of the present invention are used to produce the expanded polyethylene resin particles in accordance with an aspect of the present invention. That is, it is possible to produce the expanded polyethylene resin particles in accordance with an aspect of the present invention by foaming the polyethylene resin particles in accordance with an aspect of the present invention. Here, the polyethylene resin particles from which the expanded polyethylene resin particles are produced by foaming are also referred to as "polyethylene resin particles for expanded particles".

The polyethylene resin particles in accordance with an aspect of the present invention have a storage modulus of elasticity of 900 Pa or more and 5000 Pa or less, preferably 1100 Pa or more and 4000 Pa or less, more preferably 1300 Pa or more and 3000 Pa or less, at an angular frequency of 1 rad/sec in dynamic viscoelastic behavior measurement at 190°C.

In a case where the storage modulus of elasticity at an angular frequency of 1 rad/sec in dynamic viscoelastic behavior measurement at 190°C is less than 900 Pa, the open cell ratio tends to become higher when a processing temperature is increased during in-mold foaming molding. In a case where the storage modulus of elasticity is more than 5000 Pa, expanded particles are less likely to be foamed during in-mold foaming molding, and therefore beauty of a surface and a dimensional performance tend to be impaired.

In the molding process by in-mold foaming, the resin is transformed at a relatively slow rate, and therefore processability in in-mold foaming molding seems to be improved by causing the storage modulus of elasticity at an angular frequency of 1 rad/sec to fall within in the range of an aspect of the present application.

Moreover, a storage modulus of elasticity at an angular frequency of 100 rad/sec in dynamic viscoelastic behavior measurement at 190°C is 100000 Pa or less, preferably 95000 Pa or less, more preferably 90000 Pa or less.

In a case where the storage modulus of elasticity at an angular frequency of 100 rad/sec in dynamic viscoelastic behavior measurement at 190°C is more than 100000 Pa, a resin pressure during extrusion and a torque value during kneading tend to become higher when resin particles which are a raw material of expanded particles are produced, and productivity decreases due to mechanical restriction.

There is no preferable lower limit of a range of the storage modulus of elasticity at the angular frequency of 100 rad/sec and, in general, in a case where the storage modulus of elasticity at 100 rad/sec is intended to be lowered by reducing a molecular weight or the like, a storage modulus of elasticity at 1 rad/sec tends to become low. Therefore, in a case where the storage modulus of elasticity is to be satisfied, the range is automatically restricted. As the angular frequency increases, the storage modulus of elasticity tends to become higher. Therefore, the storage modulus of elasticity at the angular frequency of 100 rad/sec is more than the storage modulus of elasticity at the angular frequency of 1 rad/sec.

In granulation of resin particles, the resin is melted and kneaded while being sheared at a high speed in an extruder or the like, and therefore it seems that productivity in granulation of resin particles is improved by causing the storage modulus of elasticity at the angular frequency of 100 rad/sec to fall within the range of an aspect of the present application.

Note that, in an aspect of the present invention, the storage modulus of elasticity is measured by detecting, with use of a rotation-type rheometer, a stress that occurs when a flat-plate-like resin sample, which has been sufficiently preheated at 190°C, is distorted by changing a rotation angle at constant intervals. As a measuring jig, a conical plate type is used, and measurement is carried out in a nitrogen atmosphere. The measurement is carried out in a range from an angular frequency of 0.1 rad/sec to an angular frequency of 100 rad/sec, and a storage modulus of elasticity and a loss modulus of elasticity are obtained for each of the angular frequencies. Among those results, values of storage modulus of elasticity at the angular frequencies of 1 rad/sec and 100 rad/sec are employed.

Normally, the storage modulus of elasticity of polyethylene resin particles hardly changes through a foaming step and an in-mold foaming molding step. It is therefore possible that a storage modulus of elasticity is measured by melting expanded particles or an in-mold foaming molded product again, and the storage modulus of elasticity obtained as such can be assumed to be a storage modulus of elasticity of polyethylene resin particles.

The polyethylene resin which is the base resin in accordance with an aspect of the present invention can be a high density polyethylene resin, a low density polyethylene resin, a linear low density polyethylene resin, a linear low density polyethylene resin having a long-chain branch, or a mixture of those. Among those, in view of mechanical strength, obtaining highly expanded polyethylene resin particles, and the like, it is preferable to use a linear polyethylene resin as a main row material. The linear polyethylene resin can be a linear low density polyethylene resin, a linear low density polyethylene having a long-chain branch, a high density polyethylene resin, or a mixture of those. It is more preferable to use a linear low density polyethylene resin, a high density polyethylene resin, or a mixture of those as a main raw material.

The polyethylene resin which is used in an aspect of the present invention can contain, in addition to ethylene, a comonomer which can copolymerize with ethylene.

The comonomer which can copolymerize with ethylene can be $\alpha$-olefin having 3 or more and 18 or less carbon atoms. Examples of such $\alpha$-olefin encompass propene, 1-butene, 1-pentene, 1-hexene, 3,3-dimethyl-1-butene, 4-methyl-1-pentene, 4,4-dimethyl-1-pentene, 1-octene, and the like. Those can be used alone or can be used in combination of two or more.

Further, it is possible to blend the base resin with at least one selected from the group consisting of a low density polyethylene resin and a crosslinked polyethylene resin to a degree that does not affect uniformity of gas bubbles in the polyethylene resin and a mechanical characteristic, molding processability, and recyclability of an obtained in-mold foaming molded product.

A melt index (MI) of the polyethylene resin particles in an aspect of the present invention is preferably 0.5 g/10 min or more and 3.0 g/10 min or less, more preferably 0.8 g/10 min or more and 2.5 g/10 min or less.

In a case where MI of the polyethylene resin particles is less than 0.5 g/10 min, a storage modulus of elasticity increases and it is highly possible that a storage modulus of elasticity at an angular frequency of 100 rad/sec is more than 100000 Pa. Moreover, such a case may lead to deterioration in flowability and may make it difficult to obtain an in-mold foaming molded product having good appearance. In a case where MI of the polyethylene resin is more than 3.0 g/10 min, it is highly possible that a storage modulus of elasticity at an angular frequency of 1 rad/sec becomes less than 900 Pa, and an open cell ratio of an in-mold foaming molded product tends to become higher.

Here, MI of the polyethylene resin particles is measured in conformity to JIS K7210 at a temperature of 190°C and with a load of 2.16 kg.

In principle, the method for obtaining the polyethylene resin particles, whose storage modulus of elasticity is 900 Pa or more and 5000 Pa or less at an angular frequency of 1 rad/sec and is 100000 Pa or less at an angular frequency of 100 rad/sec in dynamic viscoelastic behavior measurement at 190°C, is not particularly limited. In accordance with the present invention, a method is employed in which, as the base resin, a resin is used in which a polyethylene resin (A), which is a main component having a higher melt index, is mixed with a polyethylene resin (B) whose melt index is extremely low.

The melt index of the polyethylene resin (A) which is the main component is 1.2 g/10 min or more and 10 g/10 min or less, preferably 1.2 g/10 min or more and 6.0 g/10 min or less. The melt index of the polyethylene resin (B) whose melt index is extremely low is 0.01 g/10 min or more and 0.3 g/10 min or less, preferably 0.02 g/10 min or more and 0.2 g/10 min or less.

A mixing ratio between the polyethylene resins (A) and (B) in the base resin in accordance with the present invention is as follows: that is, in a case where a total of the polyethylene resins (A) and (B) is 100% by weight, the mixing ratio is not less than 60% by weight and not more than 97% by weight of the polyethylene resin (A) and not less than 3% by weight and not more than 40% by weight of the polyethylene resin (B), preferably not less than 70% by weight and not more than 95% by weight of the polyethylene resin (A) and not less than 5% by weight and not more than 30% by weight of the polyethylene resin (B).

In a case where the polyethylene resins (A) and (B) having the MI falling within the above range are mixed at the above mixing ratio, it is more likely that the storage modulus of elasticity at an angular frequency of 1 rad/sec is 900 Pa or more and the storage modulus of elasticity at an angular frequency of 100 rad/sec is 100000 Pa or less.

In an aspect of the present invention, a density of the polyethylene resin (A) which is the main component is preferably 0.915 g/cm$^3$ or more and 0.950 g/cm$^3$ or less, more preferably 0.918 g/cm$^3$ or more and 0.940 g/cm$^3$ or less. In a case where the density of the polyethylene resin (A) is less than 0.915 g/cm$^3$, rigidity of the base resin may be low and a mechanical property may decrease. In a case where the density of the polyethylene resin (A) is higher than 0.950 g/cm$^3$, the resin may become fragile and impact strength may decrease. Further, it is possible that an amount of comonomers become extremely small and two melting peaks, i.e., a low temperature side melting peak and a high temperature side melting peak cannot be obtained on a DSC curve of the expanded particles. In view of enhancement of rigidity of an obtained in-mold foaming molded product, the density of the polyethylene resin (A) is preferably 0.930 g/cm$^3$ or more and 0.950 g/cm$^3$ or less.

In an aspect of the present invention, the density of the polyethylene resin (B) is preferably 0.915 g/cm$^3$ or more and 0.970 g/cm$^3$ or less, more preferably 0.920 g/cm$^3$ or more and 0.970 g/cm$^3$ or less.

In a case where the density of the polyethylene resin (B) is less than 0.915 g/cm$^3$, rigidity of the base resin may be low and a mechanical property may decrease. In a case where the density of the polyethylene resin (B) is higher than 0.970 g/cm$^3$, the base resin may become fragile and impact strength may decrease. Further, it becomes difficult to melt the base resin and accordingly easiness in kneading in producing resin particles is deteriorated. This may cause nonuniformity in cell structures of obtained foam, decrease in physical property, and the like.

In general, in expanded particles in which a polyethylene resin having high crystallinity and high rigidity is used as a base resin and which contain an antistatic agent, a temperature width between two endothermic peaks on a melting curve obtained by differential scanning calorimetry tends to become narrow, and a processing temperature range during in-mold foaming molding tends to become narrow.

However, in an aspect of the present invention, as with a case of expanded particles that are obtained from polyethylene resin particles having high crystallinity and high rigidity, even in a case where a polyethylene resin in which a melting temperature range is narrow is used as a raw material, specifically, even in a case where a peak temperature width is narrow, i.e., 11°C or less which is a difference between a low temperature side melting peak and a high temperature side melting peak on a DSC curve of expanded polyethylene resin particles obtained by differential scanning calorimetry in which a temperature is increased from 20°C to 220°C at a heating rate of 10°C/min, it is possible to obtain expanded particles having a broad molding processability range without impairing productivity of resin particles.

As one of methods for measuring an amount of crystal in a polyethylene resin, it is known that the amount of crystal can be calculated based on a crystal melting heat that is obtained by use of a differential scanning calorimeter.

In a case of expanded particles which are obtained from polyethylene resin particles that have a crystal melting heat (q in Fig. 2) of 145 J/g or more, the melting peak temperature width on the DSC curve of the expanded particles tends to become particularly narrow. Note that the crystal melting heat (q in Fig. 2) is a crystal melting heat that is calculated with use of a differential scanning calorimeter from a DSC curve (at a second temperature rise) of expanded polyethylene resin particles, which DSC curve is obtained in a case where, after a temperature of the polyethylene resin particles is increased from 20°C to 220°C at a heating rate of 10°C/min and then cooled to 10°C at a cooling rate of 10°C/min, the temperature of the polyethylene resin particles is increased to 220°C again at the heating rate of 10°C/min.

In a case where the density of the polyethylene resin (A) which is the main component is 0.930 g/cm$^3$ or more, the crystal melting heat q is more likely to become 145 J/g or more.

Moreover, the crystal melting heat q of the polyethylene resin is more preferably 170 J/g or less. In a case where the crystal melting heat q of the polyethylene resin is higher than 170 J/g, it is possible that the two melting peaks, i.e., the low temperature side melting peak and the high temperature side melting peak cannot be obtained on the DSC curve of the expanded particles or the melting temperature range becomes too narrow, and molding processability is deteriorated.

The antistatic agent used in accordance with an aspect of the present invention is not limited to a particular one and can be, for example, a low-molecular antistatic agent such as a fatty acid ester compound, an aliphatic ethanolamine compound, or an aliphatic ethanolamide compound; a high-molecular antistatic agent; or the like.

The fatty acid ester compound used in an aspect of the present invention can be, specifically, a glycerin ester of fatty acid having 6 or more and 24 or less carbon atoms; higher fatty acid sorbitan ester; or the like. The glycerin ester of fatty acid having 6 or more and 24 or less carbon atoms can be glycerin monoester of fatty acid having 6 or more and 24 or less carbon atoms, glycerin diester of fatty acid having 6 or more and 24 or less carbon atoms, and glycerin triester of fatty acid having 6 or more and 24 or less carbon atoms (more specifically, glycerin monoester stearate, glycerin diester stearate, glycerin triester stearate, and the like).

Examples of the aliphatic ethanolamine compound encompass, specifically, aliphatic monoethanolamine or aliphatic diethanolamine (alkyl monoethanolamine or alkyl diethanolamine) such as stearyl monoethanolamine, stearyl diethanolamine, lauryl monoethanolamine, lauryl diethanolamine, myristyl monoethanolamine, myristyl diethanolamine, pentadecyl monoethanolamine, pentadecyl diethanolamine, palmityl monoethanolamine, palmityl diethanolamine, margaryl monoethanolamine, margaryl diethanolamine, arachidyl monoethanolamine, arachidyl diethanolamine, behenyl monoethanolamine, behenyl diethanolamine, lignoceryl monoethanolamine, and lignoceryl diethanolamine; aliphatic diethanolamine fatty acid esters such as lauryl diethanolamine monolaurate, lauryl diethanolamine monomyristate, lauryl diethanolamine monopentadecylate, lauryl diethanolamine monopalmitate, lauryl diethanolamine monomargarate, lauryl diethanolamine monostearate, lauryl diethanolamine monoarachidate, lauryl diethanolamine monobehenate, lauryl diethanolamine monolignocerate, myristyl diethanolamine monolaurate, myristyl diethanolamine monomyristate, myristyl diethanolamine monopentadecylate, myristyl diethanolamine monopalmitate, myristyl diethanolamine monomargarate, myristyl diethanolamine monostearate, myristyl diethanolamine monoarachidate, myristyl diethanolamine monobehenate, myristyl diethanolamine monolignocerate, pentadecyl diethanolamine monolaurate, pentadecyl diethanolamine monomyristate, pentadecyl diethanolamine monopentadecylate, pentadecyl diethanolamine monopalmitate, pentadecyl diethanolamine monomargarate, pentadecyl diethanolamine monostearate, pentadecyl diethanolamine monoarachidate, pentadecyl diethanolamine monobehenate, pentadecyl diethanolamine monolignocerate, palmityl diethanolamine monolaurate, palmityl diethanolamine monomyristate, palmityl diethanolamine monopentadecylate, palmityl diethanolamine monopalmitate, palmityl diethanolamine monomargarate, palmityl diethanolamine monostearate, palmityl diethanolamine monoarachidate, palmityl diethanolamine monobehenate, palmityl diethanolamine monolignocerate, margaryl diethanolamine monolaurate, margaryl diethanolamine monomyristate, margaryl diethanolamine monopentadecylate, margaryl diethanolamine monopalmitate, margaryl diethanolamine monomargarate, margaryl diethanolamine monostearate, margaryl diethanolamine monoarachidate, margaryl diethanolamine monobehenate, margaryl diethanolamine monolignocerate, stearyl diethanolamine monolaurate, stearyl diethanolamine monomyristate, stearyl diethanolamine monopentadecylate, stearyl diethanolamine monopalmitate, stearyl diethanolamine monomargarate, stearyl diethanolamine monostearate, stearyl diethanolamine monoarachidate, stearyl diethanolamine monobehenate, stearyl diethanolamine monolignocerate, arachidyl diethanolamine monolaurate, arachidyl diethanolamine monomyristate, arachidyl diethanolamine monopentadecylate, arachidyl diethanolamine monopalmitate, arachidyl diethanolamine monomargarate, arachidyl diethanolamine monostearate, arachidyl diethanolamine monoarachidate, arachidyl diethanolamine monobehenate, arachidyl diethanolamine monolignocerate, behenyl diethanolamine monolaurate, behenyl diethanolamine monomyristate, behenyl diethanolamine monopentadecylate, behenyl diethanolamine monopalmitate, behenyl diethanolamine monomargarate, behenyl diethanolamine monostearate, behenyl diethanolamine monoarachidate, behenyl diethanolamine monobehenate, behenyl diethanolamine monolignocerate, lignoceryl diethanolamine monolaurate, lignoceryl diethanolamine monomyristate, lignoceryl diethanolamine monopentadecylate, lignoceryl diethanolamine monopalmitate, lignoceryl diethanolamine monomargarate, lignoceryl diethanolamine monostearate, lignoceryl diethanolamine monoarachidate, lignoceryl diethanolamine monobehenate, and lignoceryl diethanolamine monolignocerate; hydroxyalkyl monoethanolamine; and the like.

Examples of the aliphatic ethanolamide compound specifically encompass aliphatic monoethanolamide and aliphatic diethanolamide (alkyl monoethanolamide and alkyl diethanolamide) such as stearyl monoethanolamide and stearyl diethanolamide, and the like.

The high-molecular antistatic agent is, for example, a high-molecular compound in which a hydrophilic segment that serves as an electrically conductive unit is incorporated into molecules. Specific examples of the high-molecular antistatic agent encompass alkylene oxide such as polyethyleneglycol and polypropyleneglycol, polyether esteramide, polyether amideimide, polyether ester, and a copolymerized compound obtained by copolymerizing the high-molecular compound having the hydrophilic segment with olefin such as ethylene, propylene, or 1-butene. Further, the high-molecular compound that has the hydrophilic segment can contain alkali metal salt and/or an ionic liquid. Examples of a concrete product name encompass Sankonol (manufactured by Sanko Chemical Industry Co., Ltd.), PELESTAT and PELECTRON (which are manufactured by Sanyo Chemical Industrial Co., Ltd.), and the like.

Those antistatic agents can be used alone or can be used in combination of two or more. For example, a commercially available product of a mixture of stearyl diethanolamine monostearate and stearyl diethanolamine can be Electrostripper TS-11B (manufactured by Kao Corporation), and a commercially available product of a mixture of stearyl diethanolamine monostearate, stearyl diethanolamine, and aliphatic alcohol can be Electrostripper TS-15B (manufactured by Kao Corporation). Note that the aliphatic alcohol will be described later.

Among those, it is preferable to contain a glycerin ester of fatty acid having 6 or more and 24 or less carbon atoms, or an aliphatic ethanolamine compound. It is mostly preferable to contain at least one selected from the group consisting of glyceryl stearate, hydroxyalkylethanolamine, stearyl diethanolamine monostearate, and stearyl diethanolamine, because an effect of an aspect of the present invention can be greatly brought about.

A content of the antistatic agent in accordance with an aspect of the present invention is preferably 0.1 parts by weight to 3 parts by weight, more preferably 0.2 parts by weight to 2 parts by weight, relative to 100 parts by weight of the polyethylene resin which is the base resin. In a case where the content of the antistatic agent is less than 0.1 parts by weight, the antistatic property is not brought about. In a case where the content of the antistatic agent is more than 3 parts by weight, an obtained foamed molded product is deformed largely and a shrinkage ratio with respect to the mold becomes larger, and a surface of the molded product tends to be inappropriately stretched.

Note that, in accordance with the present invention, an aliphatic alcohol such as lauryl alcohol, myristyl alcohol, pentadecyl alcohol, palmityl alcohol, margaryl alcohol, stearyl alcohol, arachidyl alcohol, behenyl alcohol, lignoceryl alcohol, or the like is added in order to improve the antistatic property.

A content of aliphatic alcohol in accordance with the present invention is 0.001 parts by weight to 2 parts by weight relative to 100 parts by weight of polyethylene resin which is the base resin.

In a case where the content of aliphatic alcohol is less than 0.001 parts by weight, an antistatic effect may not be notably improved. In a case where the content of aliphatic alcohol is more than 2 parts by weight, it may be difficult to uniformly mix the aliphatic alcohol with a polyethylene resin.

The polyethylene resin particles in accordance with an aspect of the present invention can be produced by, for example, the following method.

First, raw materials, i.e., a polyethylene resin, an antistatic agent, and an additive (if necessary) are mixed by a mixing method such as a dry blending method or a master batch method.

Next, a resultant mixture is melted and kneaded with use of an extruder, a kneader, a Banbury mixer (Registered Trademark), a roll, or the like, and is then shredded into a particle form with use of a cutter, a pelletizer, or the like. Thus, polyethylene resin particles are obtained. In a case where a liquid hydrophilic compound is used, the liquid hydrophilic compound can be directly added to the extruder so as to be melted and kneaded.

A weight of one (1) particle of the polyethylene resin particles in accordance with an aspect of the present invention is preferably 0.2 mg or more and 10 mg or less, more preferably 0.5 mg or more and 6.0 mg or less.

In a case where the weight of one (1) particle of the polyethylene resin particles is less than 0.2 mg, a shrinkage ratio of an obtained in-mold foaming molded product can increase. In a case where the weight of one (1) particle of the polyethylene resin particles is more than 10 mg, it may become difficult to fill the mold with the polyethylene resin particles.

Here, the weight of one (1) particle of the polyethylene resin particles is an average weight of 100 particles which are randomly selected from the polyethylene resin particles.

Moreover, the weight of one (1) particle of the polyethylene resin particles hardly changes even through the foaming step, and there is no problem in setting the weight of one (1) particle of the polyethylene resin particles as a one (1) particle of expanded polyethylene resin particles.

To the polyethylene resin particles in accordance with an aspect of the present invention, it is possible to add an additive(s) such as a cell nucleating agent, a hydrophilic compound, an antioxidant, a coloring agent, and/or a flame retardant, according to need.

The cell nucleating agent that is used in an aspect of the present invention is generally, for example, an inorganic nucleating agent such as talc, calcium stearate, calcium carbonate, silica, kaoline, titanium oxide, bentonite, or barium sulfate. Those can be used alone or can be used in combination of two or more. Among those cell nucleating agents, talc is preferable because a uniform cell can be obtained.

It is preferable to add a hydrophilic compound to the polyethylene resin particles in accordance with an aspect of the present invention. By adding the hydrophilic compound, it is possible to easily obtain expanded particles at a high expanding ratio even in a case where an inorganic gas is used as a foaming agent.

The hydrophilic compound which is used in an aspect of the present invention encompasses: a compound containing, in its molecules, a hydrophilic group such as a carboxyl group, a hydroxyl group, an amino group, a sulfo group, or a polyoxyethylene group; a derivative of the compound; and a hydrophilic polymer. Specifically, examples of the compound containing a carboxyl group encompass lauric acid, sodium laurate, and the like, and examples of the compound containing a hydroxyl group encompass ethylene glycol, glycerin, and the like. Examples of other hydrophilic organic compound encompass an organic compound which has a triazine ring, such as melamine (chemical name: 1,3,5-triazine-2,4,6-triamine), isocyanuric acid, and a condensate of isocyanuric acid. Those can be used alone or can be used in combination of two or more.

Note that the hydrophilic polymer is a polymer whose water absorption rate, which is measured in conformity to ASTM D570, is not less than 0.5% by weight. The hydrophilic polymer encompasses: a so-called hygroscopic polymer; a water absorptive polymer which is not dissolved in water, absorbs water by an amount that is several times to several hundred times greater than its own weight, and is hardly dehydrated even by pressure; and a water-soluble polymer which is dissolved in water in a state of a room temperature to a high temperature.

Specific examples of the hydrophilic polymer encompass: an ionomer resin in which a carboxylic acid group in an ethylene-acrylic acid-maleic anhydride terpolymer or ethylene-(meth)acrylic acid copolymer is neutralized with alkali metal ions such as sodium ions or potassium ions or transition metal ions such as zinc ions, and molecules are thus cross-linked; a polymer containing a carboxyl group such as an ethylene-(meth)acrylic acid copolymer; polyamides such as nylon-6, nylon-6,6, and copolymerized nylon; nonionic water absorptive polymers such as polyethyleneglycol and polypropyleneglycol; a polyether-polyolefin resin block copolymer such as PELESTAT (product name, manufactured by Sanyo Chemical Industrial Co., Ltd.); a crosslinked polyethylene oxide polymer such as AQUA CALK (product name, manufactured by Sumitomo Seika Chemicals Co., Ltd.); and the like. Those can be used alone or can be used in combination of two or more.

Among those hydrophilic polymers, the nonionic water absorptive polymer and the polyether-polyolefin resin block copolymer are preferable because dispersion stability in a pressure-resistant container is relatively good and a water-absorbing property can be achieved by addition of a relatively small amount of those.

Among those hydrophilic compounds, glycerin, polyethyleneglycol, polypropyleneglycol, and melamine are preferable because it is easy to obtain expanded particles at a high expanding ratio even in a case where an inorganic gas is used as a foaming agent. Further, by using glycerin, polypropyleneglycol, polypropyleneglycol, or melamine, it is possible to reduce a foaming pressure for obtaining expanded particles at an intended expanding ratio, and this leads to reduction in cost by lowering necessary pressure resistance of equipment or the like.

A content of the hydrophilic compound in the expanded polyethylene resin particles in accordance with an aspect of the present invention is preferably not less than 0.01 parts by weight and not more than 10 parts by weight, more preferably not less than 0.03 parts by weight and not more than 5 parts by weight, further preferably not less than 0.05 parts by weight and not more than 1 parts by weight, relative to 100 parts by weight of the polyethylene resin which is the base resin.

In a case where the content of the hydrophilic compound is less than 0.01 parts by weight, expanded particles may not be obtained at a high expanding ratio. In a case where the content of the hydrophilic compound is more than 10 parts by weight, the expanding ratio may hardly be further improved and beauty of a surface and a mechanical property of an obtained in-mold foaming molded product may be impaired.

With use of the polyethylene resin particles thus obtained, it is possible to produce the expanded polyethylene resin particles in accordance with an aspect of the present invention.

A preferable aspect of the method for producing the expanded polyethylene resin particles in accordance with the present invention can be a method in which expanded polyethylene resin particles are produced in an aqueous dispersion system. In that method, expanded polyethylene resin particles are obtained through a foaming step in which polyethylene resin particles are dispersed in an aqueous dispersion medium together with a foaming agent in a sealed container, then a resultant mixture is heated up to a temperature that is equal to or higher than a softening temperature of the polyethylene resin particles, then a pressure is applied to the resultant mixture, and then the polyethylene resin particles, which are impregnated with the foaming agent, are released into a zone whose pressure (normally an atmospheric pressure) is lower than an internal pressure of the sealed container.

Specifically, for example, the polyethylene resin particles, the aqueous dispersion medium, a dispersion agent (if needed), and the like are put into the sealed container, and then the sealed container is subjected to vacuum drawing according to need. Next, the foaming agent is introduced into the sealed container, and subsequently the resultant mixture is heated up to a temperature that is equal to or higher than the softening temperature of the polyethylene resin. An amount of the foaming agent to be added is adjusted such that the pressure in the sealed container is raised to approximately 1.5 MPa (gage pressure) or more and 5 MPa (gage pressure) or less by the heating. After the heating, a foaming agent is further added if needed so as to adjust the pressure becomes an intended foaming pressure, and the mixture is held for more than 0 minute but not more than 120 minutes while further making fine adjustment of a foaming temperature. Subsequently, the mixture is released to a zone whose pressure (normally, an atmospheric pressure) is lower than an internal pressure of the sealed container, and thus the expanded polyethylene resin particles are obtained.

In order to adjust the expanding ratio, it is possible to adjust a temperature of an atmosphere, into which the mixture is to be released, to a temperature which is approximately a room temperature to 110°C. In order to obtain expanded particles at a particularly high expanding ratio, it is preferable to set the temperature of the atmosphere, into which the mixture is to be released, to approximately 100°C by steam or the like.

A method for introducing the foaming agent in accordance with an aspect of the present invention can be a method other than the above described one. For example, it is possible to employ a method in which polyethylene resin particles, an aqueous dispersion medium, a dispersion agent if needed, and the like are put into the sealed container, then the sealed container is subjected to vacuum drawing according to need, and then a foaming agent is introduced while the mixture is heated up to a temperature that is equal to or higher than the softening temperature of the polyethylene resin.

As another method for introducing the foaming agent, it is possible that polyethylene resin particles, an aqueous dispersion medium, a dispersion agent (if needed), and the like are put into the sealed container, then the mixture is heated up to a temperature around a foaming temperature, and the foaming agent is introduced at this time.

A method for adjusting the expanding ratio and the average cell diameter of the expanded polyethylene resin particles can be, for example, a method in which an internal pressure in the sealed container is heightened by injecting carbon dioxide, nitrogen, air, a substance used as the foaming agent, or the like by pressure before the mixture is released into a low-pressure zone, a pressure releasing rate in foaming is adjusted, the pressure is further controlled by introducing carbon dioxide, nitrogen, air, the substance used as the foaming agent, or the like also during releasing the mixture into the low-pressure zone, and thus the expanding ratio and the average cell diameter can be adjusted.

Alternatively, it is possible to adjust the expanding ratio and the average cell diameter by appropriately changing a temperature (substantially a foaming temperature) inside the sealed container before the mixture is released into the low-pressure zone.

For example, the expanding ratio of the expanded polyethylene resin particles tends to become higher in a case where an internal pressure in the sealed container is heightened, a pressure releasing rate is increased, a temperature in the sealed container before releasing the mixture is raised, and the like. The average cell diameter of the expanded polyethylene resin particles tends to become smaller in a case where an internal pressure in the sealed container is heightened, a pressure releasing rate is increased, and the like.

Examples of the foaming agent which is used in an aspect of the present invention encompass saturated hydrocarbons such as propane, butane, and pentane; ethers such as dimethyl ether; alcohols such as methanol and ethanol; inorganic gases such as air, nitrogen, and carbon dioxide; and water. Those can be used alone or can be used in combination of two or more.

Among those foaming agents, it is preferable to use carbon dioxide, nitrogen, air, or water because an environmental load is particularly small and there is no risk of combustion. Further, it is most preferable to use carbon dioxide because expanded particles can be easily obtained at a relatively high expanding ratio.

The expanded polyethylene resin particles in accordance with an aspect of the present invention show two melting peaks, i.e., a low temperature side melting peak and a high temperature side melting peak on a DSC curve that is obtained by differential scanning calorimetry in a first temperature rise. By having two melting peaks on the DSC curve, it is possible to obtain expanded particles which cause less shrinkage and have good in-mold foaming moldability.

According to the expanded polyethylene resin particles in accordance with an aspect of the present invention, a peak temperature width, which is a difference in temperature between a low temperature side melting peak temperature T1 and a high temperature side melting peak temperature Th on the DSC curve in the first temperature rise, can be 11°C or less (peak temperature width = Th - Tl, see Fig. 1), and the peak temperature width can be 9°C or less.

In a case where the peak temperature width can be 11°C or less, deterioration in molding processability range does not occur unlike the conventional technique even in a case where a polyethylene resin which has high crystallinity and high rigidity or a polyethylene resin which has been polymerized by a catalyst that narrows a comonomer distribution is used as a base resin. The peak temperature width is more preferably 5°C or more. In a case where the peak temperature width is less than 5°C, moldability may be deteriorated even in a case where the polyethylene resin particles in accordance with an aspect of the present invention are used.

Here, the DSC curve that is obtained by differential scanning calorimetry on expanded polyethylene resin particles is a DSC curve that is obtained with use of a differential scanning calorimeter in a case where 1 mg or more and 10 mg or less of expanded polyethylene resin particles are heated from 20°C to 220°C at a heating rate of 10°C/min.

Note that, in the foaming step in accordance with an aspect of the present invention which will be described later, the polyethylene resin particles which have been impregnated with the foaming agent are held for a predetermined time period at a temperature which is equal to or higher than a temperature at which a crystal starts to partially melt and at which the crystal does not completely melt, and it is thus possible to obtain two melting peaks, i.e., the low temperature side melting peak and the high temperature side melting peak on the DSC curve.

Moreover, in an aspect of the present invention, the quantity of heat (Ql) at the low temperature side melting peak and a quantity of heat (Qh) at the high temperature side melting peak are defined as follows as shown in Fig. 1.

That is, a point between the low temperature side melting peak and the high temperature side melting peak on the DSC curve, at which point a heat absorption becomes smallest, is indicated by A, a contact point is indicated by B at which the DSC curve makes contact with a tangent from the point A on the high temperature side, and a contact point is indicated by C at which the DSC curve makes contact with a tangent from the point A on the low temperature side. In this case, a part surrounded by a line segment A-B and the DSC curve is defined as a quantity of heat (Qh) of the high temperature side melting peak, and a part surrounded by a line segment A-C and the DSC curve is defined as a quantity of heat (Ql) of the low temperature side melting peak.

In the expanded polyethylene resin particles in accordance with an aspect of the present invention, a ratio of the high temperature side melting peak quantity of heat (Qh) relative to a total melting peak quantity of heat [= Qh/(Ql + Qh) × 100 (hereinafter, sometimes referred to as "DSC ratio")] is not particularly limited, and is adjusted as appropriate in accordance with a characteristic of the base resin. In general, as the DSC ratio becomes lower, it is possible to more easily obtain expanded particles at a high expanding ratio, but the expanded particles and an in-mold foaming molded product are more likely to shrink, and an open cell ratio tends to become higher. In a case where the DSC ratio is high, it may not be possible to obtain expanded particles at a sufficient expanding ratio. This leads to low expandability in in-mold foaming molding, and it may be difficult to obtain an in-mold foaming molded product which has a beautiful surface.

The DSC ratio of the expanded polyethylene resin particles in accordance with an aspect of the present invention is preferably 4% or higher and 50% or lower, more preferably 7% or higher and 35% or lower.

In a case where the DSC ratio of the expanded polyethylene resin particles is lower than 4%, there is a tendency as follows: that is, expandability of expanded polyethylene resin particles is excessively high, only expanded particles in the vicinity of a surface of the mold (i.e., a surface part of the in-mold foaming molded product) are suddenly foamed at an early stage in the in-mold foaming molding and the expanded particles are fused to each other. As a result, steam that is used in in-mold foaming molding does not permeate to expanded particles in an inner part, and an in-mold foaming molded product is obtained in which fusion is insufficient, i.e., an inner part of the in-mold foaming molded product is not fused. Moreover, the open cell ratio of the molded product tends to increase.

Meanwhile, in a case where the DSC ratio of the expanded polyethylene resin particles is higher than 50%, expandability of the expanded polyethylene resin particles is excessively low, fusion of the expanded polyethylene resin particles in the entire in-mold foaming molded product may be defective, an appearance of the in-mold foaming molded product may be deteriorated, or it may be necessary to apply a high molding pressure for fusing the expanded polyethylene resin particles to each other.

Note that the DSC ratio in the expanded polyethylene resin particles can be adjusted by appropriately changing (i) a temperature (hereinafter, sometimes referred to as "foaming temperature") in the sealed container before the mixture is released to the low-pressure zone and (ii) a holding time which are described above, when the expanded polyethylene resin particles are obtained. The DSC ratio tends to become higher when the temperature (foaming temperature) in the sealed container is lowered, the holding time is increased, and the like. Meanwhile, in a case where the temperature (foaming temperature) in the sealed container is increased, the holding time is shortened, and the like, the DSC ratio tends to become lower. Further, in a case where foaming is carried out in a state in which a crystal is completely melted by increasing the foaming temperature or the like, the high temperature side melting peak disappears, and the DSC curve of expanded particles is to have one (1) peak (that is, $Q_h = 0$ holds true, and therefore the DSC ratio becomes 0%).

The sealed container which is used in an aspect of the present invention is not particularly limited, provided that the sealed container is able to withstand an internal pressure and a temperature in the container in producing expanded particles. For example, the sealed container can be an autoclave pressure-resistant container.

The aqueous dispersion medium which is used in an aspect of the present invention is preferably water only. However, it is possible to use an aqueous dispersion medium in which methanol, ethanol, ethylene glycol, glycerin, or the like is added to water. Note that, in a case where a hydrophilic compound is contained in an aspect of the present invention, water in the aqueous dispersion medium also serves as a foaming agent, and thus contributes to improvement in expanding ratio.

In the method for producing foamed polyethylene particles in accordance with an aspect of the present invention, it is preferable that a dispersion agent is used in an aqueous dispersion medium in order to prevent the polyethylene resin particles from adhering to each other.

Examples of the dispersion agent used in accordance with an aspect of the present invention encompass inorganic dispersion agents such as calcium tertiary phosphate, magnesium tertiary phosphate, basic magnesium carbonate, calcium carbonate, barium sulfate, kaoline, talc, and clay.

Those dispersion agents can be used alone or can be used in combination of two or more.

In the method for producing foamed polyethylene particles in accordance with an aspect of the present invention, it is preferable to use a dispersion auxiliary agent together with the dispersion agent.

Examples of the dispersion auxiliary agent used in an aspect of the present invention encompass anionic surfactants of carboxylate type such as N-amino acylate, alkyl ether carboxylate, and acylated peptide; anionic surfactants of sulfonate type such as alkyl sulfonate, n-paraffin sulfonate, alkyl benzene sulfonate, alkyl naphthalene sulfonate, and sulfosuccinate; anionic surfactants of sulfate ester type such as sulfonated oil, alkyl sulfate salt, alkyl ether sulfate, alkyl amide sulfate, and alkyl aryl ether sulfate; anionic surfactants of phosphate ester type such as alkyl phosphate, and polyoxyethylene phosphate; and the like.

As the dispersion auxiliary agent, it is possible to use any of polymer surfactants of polycarboxylic acid type such as maleic acid copolymer salt and polyacrylate; and multivalent anionic polymer surfactants such as polystyrene sulfonate and naphthalene sulfonate formalin condensate.

Those dispersion auxiliary agents can be used alone or can be used in combination of two or more.

Among those, it is preferable to use, as the dispersion agent, at least one selected from the group consisting of calcium tertiary phosphate, magnesium tertiary phosphate, barium sulfate, and kaoline in combination with, as the dispersion auxiliary agent, at least one selected from the group consisting of sodium n-paraffin sulfonate and alkyl benzene sulfonate.

Used amounts of the dispersion agent and the dispersion auxiliary agent in accordance with an aspect of the present invention vary depending on their types, and a type and a used amount of polyethylene resin particles. Normally, it is preferable to mix not less than 0.1 parts by weight and not more than 3 parts by weight of the dispersion agent relative to 100 parts by weight of the aqueous dispersion medium, and it is preferable to mix not less than 0.001 parts by weight and not more than 0.1 parts by weight of the dispersion auxiliary agent relative to 100 parts by weight of the aqueous dispersion medium.

In order to achieve good dispersibility in the aqueous dispersion medium, normally, it is preferable to use the polyethylene resin particles by an amount of not less than 20 parts by weight and not more than 100 parts by weight relative to 100 parts by weight of the aqueous dispersion medium.

Instead of the above described method for producing expanded polyethylene resin particles in the aqueous dispersion system, it is possible to obtain the expanded polyethylene resin particles with a method in which the aqueous dispersion medium is not used and, for example, a foaming agent is caused to directly make contact with the polyethylene resin particles in the sealed container, the polyethylene resin particles are impregnated with the foaming agent and thus foamable polyethylene resin particles are obtained, and then the foamable polyethylene resin particles are foamed by being caused to make contact with steam, and thus expanded polyethylene resin particles are obtained.

As above described, the step of obtaining expanded polyethylene resin particles from polyethylene resin particles is sometimes referred to as "first-stage foaming step", and expanded polyethylene resin particles which are thus obtained are sometimes referred to as "first-stage expanded particles".

Further, an internal pressure is applied to the first-stage expanded particles by impregnation of inorganic gas (e.g., air, nitrogen, carbon dioxide, or the like) and then the first-stage expanded particles are caused to make contact with steam having a certain pressure. Thus, it is possible to obtain expanded polyethylene resin particles whose expanding ratio is increased as compared with the first-stage expanded particles. The step of obtaining the expanded polyethylene resin particles at a higher expanding ratio by further foaming the expanded polyethylene resin particles is sometimes referred to as "second-stage foaming step", and expanded polyethylene resin particles which are thus obtained through the second-stage foaming step are sometimes referred to as "second-stage expanded particles".

The "second-stage foaming step" is specifically a step of obtaining second-stage expanded particles, in which an expanding ratio is increased as compared with the first-stage expanded particles, by applying an internal pressure to the first-stage expanded particles by impregnation of inorganic gas (e.g., air, nitrogen, carbon dioxide, or the like) and then causing the first-stage expanded particles to make contact with steam having a certain pressure.

Here, a pressure of steam in the second-stage foaming step is preferably adjusted between 0.02 MPa (gage pressure) or higher and 0.15 MPa (gage pressure) or lower, more preferably adjusted between 0.03 MPa (gage pressure) or higher and 0.1 MPa (gage pressure) or lower, by taking into consideration the expanding ratio of second-stage expanded particles.

The internal pressure of the inorganic gas with which the first-stage expanded particles are impregnated is preferably changed as appropriate by taking into consideration the expanding ratio of second-stage expanded particles, and is preferably 0.12 MPa or more (absolute pressure) and 0.6 MPa or less (absolute pressure).

The expanding ratio of the expanded polyethylene resin particles in accordance with an aspect of the present invention is not particularly limited, and can be adjusted according to need.

Note that, from the viewpoint of reduction in weight of an expanded polyethylene resin molded product that is obtained by in-mold foaming molding, the expanding ratio of the expanded polyethylene resin particles is preferably 2 times or more and 50 times or less, more preferably 8 times or more and 45 times or less, further preferably 11 times or more and 40 times or less.

In a case where the expanding ratio of the expanded polyethylene resin particles is less than 2 times, the effect of reduction in weight is small. In a case where the expanding ratio of the expanded polyethylene resin particles is more than 50 times, a mechanical characteristic such as a compressive stress of the expanded polyethylene resin molded product that has been obtained by in-mold foaming molding tends to decrease.

Here, the expanding ratio of the expanded polyethylene resin particles is obtained as follows: that is, a weight w (g) of the expanded polyethylene resin particles is measured, then the expanded polyethylene resin particles are caused to sunk in ethanol in a graduated cylinder, and a volume v (cm$^3$) is measured based on a rise of water level in the graduated cylinder (immersing), an absolute specific gravity pb = w/v of the expanded polyethylene resin particles is calculated, and further a ratio (pr/pb) relative to a density pr of the polyethylene resin particles before foaming is calculated, and thus the expanding ratio of the expanded polyethylene resin particles is obtained.

An average cell diameter of the expanded polyethylene resin particles in accordance with an aspect of the present invention is preferably 80 $\mu$m or more and 500 $\mu$m or less, more preferably 120 $\mu$m or more and 400 $\mu$m or less.

In a case where the average cell diameter of the expanded polyethylene resin particles is less than 80 $\mu$m, an obtained expanded polyethylene resin molded product tends to greatly shrink. In a case where the average cell diameter of the expanded polyethylene resin particles is more than 500 $\mu$m, an appearance of the obtained expanded polyethylene resin molded product tends to become worse.

Here, the average cell diameter is measured as follows:
In an image obtained by microscopic observation on a cross section of an expanded particle, a straight line is drawn which substantially passes through a center of the expanded particle, the number n of gas bubbles through which the straight line passes is read, and an expanded particle diameter L ($\mu$m) determined based on an intersection between the straight line and a surface of the expanded particle is read, and the average cell diameter is obtained by Formula (1):

$$\text{Average cell diameter } (\mu m) = L/n \; ... \; (1)$$

An open cell ratio of the expanded polyethylene resin particles in accordance with an aspect of the present invention is preferably 10% or lower, more preferably 5% or lower.

In a case where the open cell ratio of the expanded polyethylene resin particles is higher than 10%, shrinkage occurs when in-mold foaming molding is carried out, and a surface property of an obtained expanded polyethylene resin molded product tends to worsen, and a compression strength also tends to decrease.

The open cell ratio of the expanded polyethylene resin particles is calculated as follows: that is, in conformity to a method described in PROCEDURE C in ASTM D2856-87, a volume Vc ($cm^3$) is measured with use of an air comparison type densimeter [manufactured by Tokyo Science Co., Ltd., Model 1000], a whole of the expanded polyethylene resin particles, whose Vc has been measured, are caused to sink in ethanol in a graduated cylinder, and an apparent volume Va ($cm^3$) of expanded polyethylene resin particles is obtained based on a rise of water level in the graduated cylinder (immersing), and thus the open cell ratio is calculated by the following formula:

$$\text{Open cell ratio (\%)} = (Va - Vc) \times 100/Va$$

According to an aspect of the present invention, an expanded polyethylene resin molded product can be obtained by carrying out in-mold foaming molding in which a mold having a predetermined shape is filled with the expanded polyethylene resin particles which have been obtained as above described, then the expanded polyethylene resin particles are heated up by steam or the like, and thus the expanded particles are fused to each other.
Example methods of the in-mold foaming molding encompass:

(A) a method in which expanded polyethylene resin particles are subjected to pressure treatment by use of an inorganic gas (e.g., air, nitrogen, carbon dioxide, or the like) so that a predetermined internal pressure is applied to the expanded polyethylene resin particles by impregnating the expanded polyethylene resin particles with the inorganic gas, and then the mold is filled with the expanded polyethylene resin particles, and then the expanded polyethylene resin particles are fused to each other by heat of steam;
(B) a method in which a mold is filled with expanded polyethylene resin particles while compressing the expanded polyethylene resin particles by a gas pressure, and the expanded polyethylene resin particles are fused to each other by heat of steam while utilizing resilience of the expanded polyethylene resin particles;
(C) a method in which a mold is filled with expanded polyethylene resin particles without particular pretreatment, and the expanded polyethylene resin particles are fused to each other by heat of steam; and the like.

In particular, according to an aspect of the present invention, it is possible to obtain a molded product having a beautiful appearance and a small ratio of dimensional shrinkage with respect to the mold even with the method (C) which is the simplest method. Therefore, it is preferable to employ the method (C).
Specifically, for example, an in-mold foaming molded product of polyethylene resin can be obtained from the expanded polyethylene resin particles in accordance with an aspect of the present invention by in-mold foaming molding as follows: a molding space, which is formed by two molds and can be closed but cannot be sealed, is filled with the expanded polyethylene resin particles without particular pretreatment in advance; molding is carried out while using steam or the like as a heating medium at a pressure of approximately 0.05 MPa to 0.20 MPa (gage pressure) for a heating time of approximately 3 seconds to 30 seconds so that the expanded polyethylene resin particles are fused to each other; the molds are cooled by water and then opened; and thus the in-mold foaming molded product of polyethylene resin is obtained.

Examples

Next, the following description will discuss details of expanded polyethylene resin particles and the method for producing the expanded polyethylene resin particles with reference to Examples and Comparative Examples. Note, however, that the Examples are not necessarily in accordance with the present invention.
In Examples and Comparative Examples, the following substances were used without particularly carrying out purification or the like.

- Glycerin [manufactured by Lion Corporation, purified glycerin D]
- Powdery basic calcium tertiary phosphate [manufactured by TAIHEI CHEMICAL INDUSTRIAL CO., LTD.]
- Sodium alkyl sulfonate (sodium n-paraffin sulfonate) [manufactured by Kao Corporation, LATEMUL PS]
- Antistatic agent

  (a): monoglyceride stearate [manufactured by Riken Vitamin Co. Ltd., RIKEMAL S-100]
  (b): hydroxyalkylethanolamine [manufactured by Miyoshi Oil & Fat Co., Ltd., Dusper 125B]
  (c): stearyl diethanolamine monostearate [manufactured by Kao Corporation, Electrostripper TS-6B]
  (d): stearyl diethanolamine [manufactured by Tokyo Chemical Industry Co., Ltd., reagent]
  (e): mixture of stearyl diethanolamine monostearate and stearyl diethanolamine [manufactured by Kao Corporation, Electrostripper TS-11B]

(f): mixture of stearyl diethanolamine monostearate, stearyl diethanolamine, and aliphatic alcohol [manufactured by Kao Corporation, Electrostripper TS-15B]

Polyethylene resins used in Examples and Comparative Examples were commercially available products available from polyolefin manufacturers (such as SK Chemicals, Japan Polyethylene Corporation, Dow Chemical Japan Ltd., Prime Polymer Co., Ltd., and UBE-MARUZEN POLYETHYLENE Co., Ltd.). Table 1 shows properties of polyethylene resins used in Examples and Comparative Examples.

[Table 1]

| Polyethylene resin | | (A-1) | (A-2) | (A-3) | (A-4) | (A-5) | (A-6) |
|---|---|---|---|---|---|---|---|
| Density | g/cm$^3$ | 0.926 | 0.919 | 0.919 | 0.931 | 0.935 | 0.931 |
| M I | g/10min | 2.1 | 2.8 | 6.0 | 4.0 | 2.5 | 2.1 |
| Melting Point | °C | 123 | 123 | 120 | 123 | 125 | 124 |
| Polyethylene resin | | (B-1) | (B-2) | (C-1) | (C-2) | | |
| Density | g/cm$^3$ | 0.952 | 0.956 | 0.926 | 0.930 | | |
| M I | g/10min | 0.04 | 0.2 | 1.0 | 1.0 | | |
| Melting Point | °C | 131 | 133 | 123 | 123 | | |

The following description will discuss an evaluation method carried out in Examples and Comparative Examples.

<Resin pressure in producing resin particles>

In [Preparation of polyethylene resin particles] below, a resin pressure at a part in front of a die which resin pressure was displayed on an extruder was confirmed, and evaluation was carried out based on the following criteria. Note that, in a case where a type of extruder or an extruding condition changes, the resin pressure is more likely to change. Therefore, the resin pressure was evaluated by carrying out extrusion with use of the same extruder under the same condition.
V (very good): The resin pressure was 7.0 MPa or less
G (good): The resin pressure was more than 7.0 MPa and 7.5 MPa or less
E (enough): The resin pressure was more than 7.5 MPa and 8.0 MPa or less
P (poor): The resin pressure was more than 8.0 MPa

<Measurement of storage modulus of elasticity of resin particles>

A flat-plate-like space of 100 mm × 100 mm was provided, with use of a spacer having a thickness of 1.0 mm, in a pressing machine [manufactured by Fuji Setsubi Kogyo, 37TS molding machine] which was preheated to 190°C in advance, and polyethylene resin particles were heat-pressed for 5 minutes at a pressure of 56 kg/cm$^2$ (5.5 MPa). After that, the polyethylene resin particles were cooled to 50°C or lower, the spacer was removed, and thus a polyethylene resin plate was obtained which had a size of approximately 100 mm × approximately 100 mm × approximately 1 mm. The polyethylene resin plate thus obtained was punched out with use of a punch having a diameter φ of 25 mm, and thus test pieces were obtained.
As a measuring device, a viscoelastic measuring device [manufactured by TA Instruments, ARES] was used, and a conical plate type jig having a diameter of 25 mm and a cone angle of 0.04 rad was attached to the viscoelastic measuring device. A constant temperature bath was provided so as to surround the jig and a temperature was kept to 190°C. After the jig was preheated, the constant temperature bath was opened and the test piece was inserted between parallel plates. Then, the constant temperature bath was closed and preheated for 5 minutes. After that, the test piece was compressed to 0.07 mm of a gap in the conical plate which is described in a calibration certificate. After the compression, the constant temperature bath was opened again, and a resin that was squeezed out from the conical plate was scraped off with a brass spatula. Then, the constant temperature bath was closed and the temperature was kept for 5 minutes again, and then dynamic viscoelastic behavior measurement was started.
The measurement was carried out within an angular frequency range between 0.1 rad/sec and 100 rad/sec, and a storage modulus of elasticity and a loss modulus of elasticity at each of the angular frequencies were obtained. Among those results, values of storage modulus of elasticity at the angular frequencies of 1 rad/sec and 100 rad/sec were employed. Note that the measurement was carried out with a strain amount of 5% in a nitrogen atmosphere.

<Measurement of crystal melting heat of resin particles>

The obtained polyethylene resin particles (5 mg to 6 mg) were heated from 20°C to 220°C at a heating rate of 10°C/min and then cooled to 10°C at a rate of 10°C/min. Subsequently, the polyethylene resin particles were heated up to 220°C at a heating rate of 10°C/min again, and a DSC curve in the second heating was obtained with use of a differential scanning calorimeter [manufactured by Seiko Instruments Inc., model: DSC6200] (exemplified in Fig. 2). A total quantity of heat (q) of endothermic on the obtained DSC curve was assumed to be a crystal melting heat of resin particles.

<Measurement of MI of resin particles>

With use of an MI meter described in JIS K7210, MI of polyethylene resin particles was measured under the following conditions: that is, an orifice diameter $\varphi$ was 2.0959±0.005 mm, an orifice length was 8.000±0.025 mm, a load was 2160 g, and a temperature was 190±0.2°C.

<Measurement of expanding ratio>

The obtained expanded polyethylene resin particles were dried at 60°C for 2 hours, and were caused to stand still for 1 hour in a room in which a temperature was 23°C and a humidity was 50%, and then a weight w (g) of the expanded polyethylene resin particles was measured. Separately, a volume v ($cm^3$) of the expanded polyethylene resin particles was measured by immersing, and an absolute specific gravity $\rho b$ "$\rho b = w \div v$" of expanded particles was calculated.
Then, from a ratio with respect to a density $\rho r$ of polyethylene resin particles before foaming, an expanding ratio K "$K = \rho r \div \rho b$" was calculated.

<Measurement of average cell diameter of expanded particles>

The obtained second-stage expanded particle of polyethylene resin was cut at the center thereof with use of a two-edged blade razor [manufactured by FEATHER Safety Razor Co., Ltd., two-edged blade of high stainless steel].
The cross section was observed with use of an optical microscope [manufactured by Keyence Corporation, VHX-100] at a magnification of 50 times, and thus an image was obtained. In the image, a straight line was drawn which substantially passed through a center of the expanded particle, the number n of gas bubbles through which the straight line passes was read, and an expanded particle diameter L ($\mu$m) determined based on an intersection between the straight line and a surface of the expanded particle was read, and an average cell diameter was obtained by Formula (1):

$$\text{Average cell diameter (µm)} = L/n \ \dots \ (1)$$

<Melting peak temperature width and DSC ratio of expanded particles>

The obtained first-stage expanded particles of polyethylene resin (5 mg to 6 mg) were heated from 20°C to 220°C at a heating rate of 10°C/min, and a DSC curve (exemplified in Fig. 1) was obtained with use of a differential scanning calorimeter [manufactured by Seiko Instruments Inc., model: DSC6200].
A temperature difference (Th - Tl) between a low temperature side melting peak temperature (Tl) and a high temperature side melting peak temperature (Th) on the obtained DSC curve was assumed to be a melting peak temperature width.
A DSC ratio was calculated by the following formula based on a low temperature side melting peak heat Ql and a high temperature side melting peak heat Qh among those melting peaks.

$$\text{DSC ratio} = Qh/(Ql + Qh) \times 100$$

<Open cell ratio of expanded particles>

In conformity to the method described in PROCEDURE C in ASTM D2856-87, a volume Vc ($cm^3$) of the obtained second-stage expanded particles of polyethylene resin was measured with use of an air comparison type densimeter [manufactured by Tokyo Science Co., Ltd., Model 1000].

Next, a whole of the expanded polyethylene resin particles, whose Vc had been measured, were caused to sink in ethanol in a graduated cylinder, and an apparent volume Va ($cm^3$) of expanded polyethylene resin particles was obtained based on a rise of water level in the graduated cylinder (immersing).

The open cell ratio of expanded particles was calculated by the following formula:

$$\text{Open cell ratio (\%)} = (Va - Vc) \times 100/Va$$

<Lowest molding pressure in molding>

Foamed molded products which are to be evaluated were obtained by carrying out molding while changing, by 0.01 MPa, a steam pressure within a range between 0.10 MPa and 0.18 MPa (gage pressure) in a heating step in [Preparation of in-mold foaming molded product of polyethylene resin] described below. In each of the foamed molded products, a crack having a depth of approximately 5 mm was provided in a surface with a knife, then the in-mold foaming molded product was split along the crack, then a fracture surface was observed, and then a ratio of the number of fractured particles relative to the total number of particles in the fracture surface was calculated. Thus, a fusion ratio of the molded product was evaluated.

A lowest molding pressure at which the fusion ratio reached 80% or higher was assumed to be a lowest molding pressure.

<Highest molding pressure in molding>

Foamed molded products which are to be evaluated were obtained by carrying out molding while changing, by 0.01 MPa, a steam pressure within a range between 0.10 MPa and 0.18 MPa (gage pressure) in a heating step in [Preparation of in-mold foaming molded product of polyethylene resin] described below. From a center part of each of the foamed molded products, a small piece in a size of approximately 25 mm $\times$ 25 mm $\times$ 30 mm was cut out as a foam sample for measurement.

In conformity to the method described in PROCEDURE C in ASTM D2856-87, a volume vc ($cm^3$) of the foam sample for measurement was measured with use of the air comparison type densimeter [manufactured by Tokyo Science Co., Ltd., Model 1000].

Meanwhile, a whole of the foam sample of polyethylene resin, whose vc had been measured, was caused to sink in ethanol in a graduated cylinder, and an apparent volume va ($cm^3$) of the polyethylene resin foam was measured based on a rise of water level in the graduated cylinder (immersing).

From the following formula, the open cell ratio (%) of the foamed molded product was calculated.

$$\text{Open cell ratio (\%) of foamed molded product} = (va - vc) \times 100/va$$

In accordance with an increase in steam pressure, the open cell ratio also increases. A highest pressure at which the open cell ratio becomes 25% or lower was assumed to be a highest molding pressure. Note that, around 20% to 25% of the open cell ratio, deformation of the in-mold foaming molded product tends to become large.

<Molding processability range>

A difference between the lowest molding pressure and the highest molding pressure was assumed to be a molding processability range.

<Beauty of surface of foamed molded product>

Among the obtained foamed molded products to be evaluated, a surface and an end part of a foamed molded product molded at a lowest molding pressure +0.01 MPa were observed, and evaluated based on criteria described below. Note that the end part of the foamed molded product indicates a ridge part at which a surface and another surface of the in-mold foaming molded product intersect with each other.

G (good): Adjacent expanded particles are neatly fused to each other in all parts, and no gap exists between expanded particles.

E (enough): There are a few gaps between adjacent expanded particles.
P (poor): There are many gaps between adjacent expanded particles.

<Ratio of dimensional shrinkage of foamed molded product with respect to mold>

Among the obtained foamed molded products to be evaluated, a longer side dimension (in a 400 mm direction of the mold) of a foamed molded product molded at a lowest molding pressure +0.01 MPa was measured with use of a digital vernier caliper [manufactured by Mitutoyo Corporation].

A ratio of dimensional shrinkage with respect to the mold was calculated based on the following formula, where $L_0$ is a corresponding dimension of the mold and $L_1$ is a dimension of the foamed molded product, and the ratio of dimensional shrinkage was evaluated based criteria below.

$$\text{Ratio of dimensional shrinkage with respect to mold}$$

$$= (L_0 - L_1) \div L_0 \times 100$$

G (good): A ratio of dimensional shrinkage with respect to the mold is 3% or lower.
E (enough): A ratio of dimensional shrinkage with respect to the mold is higher than 3% and 4% or lower.
P (poor): A ratio of dimensional shrinkage with respect to the mold is higher than 4%.

<Open cell ratio of foamed molded product>

Among the obtained in-mold foaming molded products, a small piece in a size of approximately 25 mm $\times$ 25 mm $\times$ 30 mm was cut out, as a foam sample for measurement, from a center part of each of a foamed molded product molded at the lowest molding pressure and a foamed molded product molded at the lowest molding pressure +0.02 MPa.

In conformity to the method described in PROCEDURE C in ASTM D2856-87, a volume Vc ($cm^3$) of the foam sample of polyethylene resin was measured with use of an air comparison type densimeter [manufactured by Tokyo Science Co., Ltd., Model 1000].

Meanwhile, a whole of the foam sample of polyethylene resin, whose Vc had been measured, was caused to sink in ethanol in a graduated cylinder, and an apparent volume Va ($cm^3$) of polyethylene resin foam was measured based on a rise of water level in the graduated cylinder (immersing).

From the following formula, the open cell ratio (%) of the foamed molded product was calculated.

$$\text{Open cell ratio (\%)} = (Va - Vc) \times 100/Va$$

<Deformation by sink>

Among the obtained foamed molded products to be evaluated, a thickness (in a 60 mm direction of the mold) of an end part of a foamed molded product molded at a lowest molding pressure +0.02 MPa was measured with use of a digital vernier caliper [manufactured by Mitutoyo Corporation]. The thickness thus obtained is represented by $D_E$. Moreover, a thickness of an inner part at which a sink easily occurs and which is at a location that is 50 mm apart from a longer side edge and 50 mm apart from a shorter side edge of the foamed molded product was measured with use of a neck vernier caliper [manufactured by Mitutoyo Corporation], and the thickness thus obtained is represented by $D_I$. From a formula below, an amount of sink was calculated, and evaluated based on the following criteria (for a measuring location, see Fig. 2).

$$\text{Amount of sink} = D_E - D_I$$

G (good): An amount of sink is less than 1.5 mm.
E (enough): An amount of sink is 1.5 mm or more and less than 2.5 mm.
P (poor): An amount of sink is 2.5 mm or more.

EP 3 269 762 B1

<Antistatic property>

Among the obtained foamed molded products to be evaluated, a foamed molded product molded at a lowest molding pressure +0.01 MPa was caused to stand still in a room having a constant temperature of 23°C and a constant humidity of 50% for 72 hours, and then a surface resistivity, which was obtained in a case where an electric current of 500 V was supplied for 1 minute, was measured in conformity to JIS K6911 with use of a surface high resistivity meter [Hiresta HT-201, manufactured by Mitsubishi Petrochemical Co., Ltd.]. For each sample, five parts were measured and an average value thereof was obtained, and the average value was assumed to be the surface resistivity.

(Example 1)

[Preparation of polyethylene resin particles]

(A-1) 90 parts by weight of a linear polyethylene resin and (B-1) 10 parts by weight of a linear polyethylene resin were mixed and, with respect to 100 parts by weight in total of the blended linear polyethylene resins, (a) 1.0 part by weight of monoglyceride stearate as an antistatic agent, and 0.2 parts by weight of glycerin, and 0.1 parts by weight of talc as a cell nucleating agent, were dry-blended.
The mixture thus obtained by dry blending was put into a twin-screw extruder having an aperture diameter of 45 mm, then melted and kneaded at a resin temperature of approximately 220°C, then extruded into a form of strand through a circular die that was attached to a tip of the extruder, then cooled with water, then cut with a cutter, and thus polyethylene resin particles were obtained. A particle weight of one (1) particle was 4.5 mg. Table 2 shows evaluation results of resin pressure in production.
Note that, a supplying amount of resin in extrusion was adjusted to 15 kg/h, a screw rotation speed was adjusted to 50 rpm, a temperature of a heater in the extruder was adjusted to 200°C, and a die with six holes each having a diameter of 3.0 mm was used.
A storage modulus of elasticity and MI of the obtained polyethylene resin particles were measured. Table 2 shows results of the measurement.

[Preparation of expanded polyethylene resin particles]

<First-stage foaming>

Into a pressure resistant autoclave having a capacity of 10 L, 100 parts by weight of obtained polyethylene resin particles (2.4 kg), 200 parts by weight of water, 0.5 parts by weight of calcium tertiary phosphate as a low-watersoluble inorganic compound, and 0.03 parts by weight of sodium alkyl sulfonate (sodium n-paraffin sulfonate) as a surfactant were put, and then 7 parts by weight of a carbonic acid gas as a foaming agent was added while stirring.
A temperature of the mixture in the autoclave was raised to a foaming temperature of 121.9°C as shown in Table 2. After that, a carbonic acid gas was additionally injected, and thus an internal pressure of the autoclave was raised to a foaming pressure of 3.5 MPa-G as shown in Table 2. After the foaming temperature and the foaming pressure were kept for 30 minutes, a valve in a lower part of the autoclave was opened so that the mixture in the autoclave was released, through an orifice (one hole) having a diameter of 4.0 mm, to an atmosphere of 100°C. Thus, the expanded polyethylene resin particles were obtained.
An expanding ratio and a DSC ratio of the obtained first-stage expanded particles were measured. Table 2 shows results of the measurement.

<Second-stage foaming>

After moisture in the obtained first-stage expanded particles of polyethylene resin was removed, the first-stage expanded particles were put into a pressure-resistant container and a pressure was applied so that the first-stage expanded particles were impregnated with air and an internal pressure of the first-stage expanded particles was adjusted to 0.17 MPa. Subsequently, the first-stage expanded particles were heated by steam (steam pressure of 0.053 MPa-G) so as to carry out second-stage foaming. Thus, second-stage expanded particles of polyethylene resin were obtained at an expanding ratio of approximately 25 times.
An average cell diameter and an open cell ratio of the obtained second-stage expanded particles of polyethylene resin were measured. Table 2 shows results of the measurement.

[Preparation of in-mold foaming molded product of polyethylene resin]

After moisture in the obtained second-stage expanded particles of polyethylene resin was removed, a mold having a molding space in a flat plate shape having a length of 400 mm × a width of 300 mm × a thickness of 60 mm was filled with the second-stage expanded particles, and a chamber in the mold was heated by steam for 10 seconds. After that, an exhaust valve was closed and the second-stage expanded particles were heated by steam for 12 seconds, and thus the expanded particles were fused to each other. Next, the steam was exhausted, then the inside of the mold and a surface of the molded product were cooled by water, and then the molded product was taken out. Thus, an expanded polyethylene resin molded product was obtained.

Note that the molding was carried out by changing, by 0.01 MPa, the steam pressure within a range between 0.10 MPa and 0.18 MPa (gage pressure) in the heating step. Among the heating time of 12 seconds in the heating step, a period for which the set pressure was kept was 4 seconds.

The foamed molded products thus obtained were caused to stand still at 23°C for 2 hours, then cured at 75°C for 24 hours, then caused to stand still in a room at 23°C for 4 hours. Thus, subjects to be evaluated were obtained.

A lowest value (lowest molding pressure) of a steam pressure at which a fusion ratio reaches 80% or higher was specified, and then a ratio of dimensional shrinkage with respect to the mold, beauty of a surface, and an antistatic property of a foamed molded product molded at the lowest molding pressure +0.01 MPa were evaluated, and deformation of a foamed molded product molded at a lowest molding pressure +0.02 MPa was evaluated. Further, in order to evaluate the open cell ratio, an open cell ratio (L) at the lowest molding pressure and an open cell ratio (H) at the lowest molding pressure +0.02 MPa were measured. Table 2 shows results of the measurement.

(Examples 2 through 13)

Polyethylene resin particles, expanded polyethylene resin particles, and in-mold foaming molded products of polyethylene resin were prepared with operations similar to those of Example 1, except that the types and the mixed amounts of the linear polyethylene resins and the type and the mixed amount of the antistatic agent in [Preparation of polyethylene resin particles] above were changed as shown in Table 2, and the foaming temperature and the foaming pressure in the first-stage foaming and the internal pressure and the steam pressure in the second-stage foaming in [Preparation of expanded polyethylene resin particles] above were changed as shown in Table 2.

Measurement similar to that of Example 1 was carried out on the obtained polyethylene resin particles, expanded polyethylene resin particles, and in-mold foaming molded products of polyethylene resin. Table 2 shows results of the measurement.

(Example 14)

Polyethylene resin particles, expanded polyethylene resin particles, and an in-mold foaming molded product of polyethylene resin were prepared with operations similar to those of Example 1, except that glycerin was not added in [Preparation of polyethylene resin particles] above and the foaming temperature and the foaming pressure in first-stage foaming and the internal pressure and the steam pressure in second-stage foaming in [Preparation of expanded polyethylene resin particles] above were changed as shown in Table 2.

Measurement similar to that of Example 1 was carried out on the obtained polyethylene resin particles, expanded polyethylene resin particles, and in-mold foaming molded product of polyethylene resin. Table 2 shows results of the measurement.

[Table 2]

| | | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|---|
| Resin particles | Linear polyethylene resin (A) | Type | (A)-1 | (A)-1 | (A)-2 | (A)-2 | (A)-3 | (A)-3 | (A)-1 | (A)-1 | (A)-1 | (A)-1 | (A)-1 | (A)-1 | (A)-1 | (A)-1 |
| | | P by W | 90 | 95 | 90 | 70 | 85 | 70 | 80 | 90 | 90 | 90 | 90 | 90 | 90 | 90 |
| | Linear polyethylene resin (B) | Type | (B)-1 | (B)-1 | (B)-1 | (B)-1 | (B)-1 | (B)-1 | (B)-2 | (B)-1 | (B)-1 | (B)-1 | (B)-1 | (B)-1 | (B)-1 | (B)-1 |
| | | P by W | 10 | 5 | 10 | 30 | 15 | 30 | 20 | 10 | 10 | 10 | 10 | 10 | 10 | 10 |
| | Antistatic agent | Type | (a) | (a) | (a) | (a) | (a) | (a) | (a) | (a) | (b) | (c) | (d) | (e) | (f) | (a) |
| | | P by W | 1 | 1 | 1 | 1 | 1 | 1 | 1 | 2 | 1 | 1 | 1 | 1 | 1 | 1 |
| | Glycerin | P by W | 0.2 | 0.2 | 0.2 | 0.2 | 0.2 | 0.2 | 0.2 | 0.2 | 0.2 | 0.2 | 0.2 | 0.2 | 0.2 | - |
| | Talc | P by W | 0.1 | 0.1 | 0.1 | 0.1 | 0.1 | 0.1 | 0.1 | 0.1 | 0.1 | 0.1 | 0.1 | 0.1 | 0.1 | 0.1 |
| | Resin pressure | - | V | V | V | G | V | V | V | V | V | V | V | V | V | V |
| | S.M.E. (1 rad/sec) | Pa | 1831 | 1380 | 1413 | 2976 | 1198 | 1802 | 1519 | 1728 | 1852 | 1841 | 1815 | 1818 | 1851 | 1820 |
| | S.M.E. (100 rad/sec) | Pa | 81999 | 80077 | 75014 | 80232 | 84283 | 83306 | 87119 | 80705 | 82325 | 82360 | 82706 | 81922 | 82003 | 82141 |
| | MI of resin particles | g/10min | 1.3 | 1.7 | 1.9 | 1.0 | 2.9 | 1.5 | 1.4 | 1.4 | 1.3 | 1.3 | 1.3 | 1.3 | 1.3 | 1.3 |
| First-stage foaming | Foaming temperature | °C | 121.9 | 121.0 | 121.5 | 124.2 | 122.0 | 123.3 | 123.1 | 121.9 | 121.9 | 121.9 | 121.9 | 121.9 | 121.9 | 121.1 |
| | Foaming pressure | MPa·G | 3.5 | 3.5 | 3.5 | 3.5 | 3.5 | 3.5 | 3.5 | 3.5 | 3.5 | 3.5 | 3.5 | 3.5 | 3.5 | 4.5 |
| | Expanding ratio | Times | 12.5 | 12.9 | 12.8 | 11.9 | 13.9 | 12.5 | 12.1 | 13.1 | 12.6 | 12.6 | 12.4 | 12.4 | 12.6 | 12.9 |
| | Number of melting peaks | - | 2 peaks | 2 peaks | 2 peaks | 2 peaks | 2 peaks | 2 peaks | 2 peaks | 2 peaks | 2 peaks | 2 peaks | 2 peaks | 2 peaks | 2 peaks | 2 peaks |
| | DSC ratio | % | 18.6 | 24.1 | 24.5 | 13.8 | 28.1 | 15.2 | 22.3 | 18.1 | 18.9 | 18.2 | 18.5 | 18.9 | 18.2 | 18.8 |
| Second-stage foaming | Internal pressure | MPa | 0.17 | 0.18 | 0.17 | 0.26 | 0.14 | 0.25 | 0.20 | 0.18 | 0.17 | 0.18 | 0.17 | 0.17 | 0.17 | 0.17 |
| | Steam pressure | MPa·G | 0.053 | 0.048 | 0.045 | 0.052 | 0.049 | 0.047 | 0.045 | 0.046 | 0.052 | 0.048 | 0.054 | 0.052 | 0.051 | 0.053 |
| | Average cell diameter | μm | 240 | 220 | 230 | 230 | 240 | 220 | 230 | 260 | 230 | 230 | 250 | 240 | 250 | 170 |
| | Open cell ratio | % | 2 | 3 | 3 | 2 | 3 | 2 | 2 | 2 | 2 | 2 | 2 | 2 | 2 | 3 |
| In-mold molding | Lowest M.P. | MPa·G | 0.11 | 0.11 | 0.11 | 0.12 | 0.10 | 0.12 | 0.11 | 0.11 | 0.11 | 0.11 | 0.11 | 0.11 | 0.11 | 0.11 |
| | Beauty of surface | - | G | G | G | G | G | G | G | G | G | G | G | G | G | G |
| | R.D.S. | - | G | G | G | G | G | G | G | G | G | G | G | G | G | G |
| | Open cell ratio (L) | % | 11 | 13 | 13 | 10 | 15 | 14 | 12 | 12 | 11 | 11 | 11 | 10 | 12 | 13 |
| | Open cell ratio (H) | % | 15 | 18 | 17 | 14 | 19 | 17 | 16 | 17 | 14 | 15 | 14 | 14 | 15 | 18 |
| | Deformation | - | G | G | G | G | G | G | G | G | G | G | G | G | G | G |
| | Antistatic property | Ω/□ | 2.5×10^11 | 2.7×10^11 | 2.7×10^11 | 2.4×10^11 | 2.8×10^11 | 2.9×10^11 | 2.6×10^11 | 7.3×10^10 | 2.0×10^10 | 1.8×10^11 | 1.9×10^11 | 6.9×10^10 | 6.1×10^10 | 3.1×10^10 |

Ex.: Example
S.M.E.: Storage modulus of elasticity
P by W: Parts by weight
Lowest M.P.: Lowest molding pressure
R.D.S.: Ratio of dimensional shrinkage with respect to mold

V: Very good
G: Good

(Examples 15 through 27)

Polyethylene resin particles, expanded polyethylene resin particles, and in-mold foaming molded products of polyethylene resin were prepared with operations similar to those of Example 1, except that the types and the mixed amounts of the linear polyethylene resins, and the type and the mixed amount of the antistatic agent, and addition/non-addition of glycerin in [Preparation of polyethylene resin particles] above were changed as shown in Table 3, and the foaming temperature and the foaming pressure in the first-stage foaming and the internal pressure and the steam pressure in the second-stage foaming in [Preparation of expanded polyethylene resin particles] above were changed as shown in Table 3.

In addition to measurement similar to that of Example 1, a crystal melting heat q of obtained polyethylene resin particles was measured. Moreover, in addition to measurement similar to that of Example 1, a melting peak temperature width of first-stage expanded particles was measured. Further, measurement similar to that of Example 1 was carried out on obtained second-stage expanded particles of polyethylene resin. Furthermore, with regard to in-mold foaming molded products of polyethylene resin, a ratio of dimensional shrinkage with respect to the mold, beauty of a surface, and an antistatic property were evaluated, an open cell ratio was measured, and a highest molding pressure was specified. Table 3 shows results of evaluation with respect to the obtained polyethylene resin particles, expanded polyethylene resin particles, and in-mold foaming molded products of polyethylene resin.

[Table 3]

| | | | Ex. 15 | Ex. 16 | Ex. 17 | Ex. 18 | Ex. 19 | Ex. 20 | Ex. 21 | Ex. 22 | Ex. 23 | Ex. 24 | Ex. 25 | Ex. 26 | Ex. 27 |
|---|---|---|---|---|---|---|---|---|---|---|---|---|---|---|---|
| Resin particles | Polyethylene resin (A) | Type | (A-4) | (A-4) | (A-4) | (A-5) | (A-6) | (A-4) | (A-4) | (A-4) | (A-4) | (A-4) | (A-4) | (A-4) | (A-4) |
| | | P by W | 80 | 70 | 60 | 90 | 95 | 70 | 80 | 80 | 80 | 80 | 80 | 80 | 80 |
| | Polyethylene resin (B) | Type | (B-1) | (B-1) | (B-1) | (B-1) | (B-1) | (B-2) | (B-1) | (B-1) | (B-1) | (B-1) | (B-1) | (B-1) | (B-1) |
| | | PbyW | 20 | 30 | 40 | 10 | 5 | 30 | 20 | 20 | 20. | 20 | 20 | 20 | 20 |
| | Antistatic agent | Type | (a) | (a) | (a) | (a) | (a) | (a) | (a) | (b) | (c) | (d) | (e) | (f) | (a) |
| | | PbyW | 1 | 1 | 1 | 1 | 1 | 1 | 2 | 1 | 1 | 1 | 1 | 1 | 1 |
| | Glycerin | PbyW | 0.2 | 0.2 | 0.2 | 0.2 | 0.2 | 0.2 | 0.2 | 0.2 | 0.2 | 0.2 | 0.2 | 0.2 | - |
| | Talc | PbyW | 0.1 | 0.1 | 0.1 | 0.1 | 0.1 | 0.1 | 0.1 | 0.1 | 0.1 | 0.1 | 0.1 | 0.1 | 0.1 |
| | Resin pressure | - | V | V | G | V | V | V | V | V | V | V | V | V | V |
| | S.M.E. (1 rad/sec) | Pa | 1216 | 1810 | 2531 | 1565 | 1200 | 1186 | 1162 | 1209 | 1266 | 1254 | 1280 | 1241 | 1254 |
| | S.M.E. (100 rad/sec) | Pa | 70137 | 77663 | 91144 | 80625 | 73684 | 69853 | 69295 | 70556 | 70832 | 70043 | 70198 | 70494 | 70706 |
| | C.M.H. | J/g | 155 | 160 | 165 | 161 | 148 | 161 | 154 | 155 | 154 | 155 | 155 | 154 | 165 |
| | MI of resin particles | g/10min | 2.1 | 1.4 | 0.9 | 1.8 | 1.9 | 2.0 | 2.2 | 2.1 | 2.1 | 2.1 | 2.1 | 2.1 | 2.1 |
| First-stage foaming | Foaming temperature | °C | 122.3 | 123.4 | 123.6 | 124.3 | 121.8 | 123.5 | 122.2 | 122.3 | 122.3 | 122.3 | 122.3 | 122.3 | 121.8 |
| | Foaming pressure | MPa-G | 3.5 | 3.5 | 3.5 | 3.5 | 3.5 | 3.5 | 3.5 | 3.5 | 3.5 | 3.5 | 3.5 | 3.5 | 4.5 |
| | Expanding ratio | Times | 13.3 | 12.6 | 11.9 | 13.1 | 12.8 | 12.3 | 13.5 | 13.6 | 13.5 | 13.7 | 13.5 | 13.4 | 13.2 |
| | M.P.T.W. | °C | 7.5 | 6.5 | 5.6 | 6.3 | 8.8 | 5.9 | 7.4 | 7.4 | 7.6 | 7.6 | 7.4 | 7.7 | 7.2 |
| | DSC ratio | % | 22.1 | 14.1 | 9.4 | 17.6 | 25.1 | 24.5 | 21.8 | 22.6 | 22.0 | 21.8 | 222 | 22.4 | 22.7 |

EP 3 269 762 B1

24

| | | | Ex. 15 | Ex. 16 | Ex. 17 | Ex. 18 | Ex. 19 | Ex. 20 | Ex. 21 | Ex. 22 | Ex. 23 | Ex. 24 | Ex. 25 | Ex. 26 | Ex. 27 |
|---|---|---|---|---|---|---|---|---|---|---|---|---|---|---|---|
| Second-stage foaming | Internal pressure | MPa | 0.19 | 0.23 | 0.28 | 0.25 | 0.23 | 0.26 | 0.19 | 0.21 | 0.21 | 0.22 | 0.21 | 0.21 | 0.22 |
| | Steam pressure | MPa-G | 0.053 | 0.052 | 0.054 | 0.049 | 0.041 | 0.060 | 0.050 | 0.051 | 0.052 | 0.047 | 0.051 | 0.053 | 0.050 |
| | Average cell diameter | μm | 230 | 230 | 220 | 220 | 220 | 200 | 250 | 230 | 230 | 240 | 220 | 240 | 190 |
| | Open cell ratio | % | 3 | 2 | 2 | 2 | 3 | 3 | 3 | 3 | 3 | 3 | 3 | 3 | 3 |
| In-mold foaming molding | Beauty of surface | - | G | G | G | G | G | G | G | G | G | G | G | G | G |
| | R.D.S. | - | G | G | G | G | G | G | G | G | G | G | G | G | G |
| | Lowest M.P. | MPa | 0.11 | 0.12 | 0.13 | 0.12 | 0.11 | 0.13 | 0.11 | 0.11 | 0.11 | 0.11 | 0.11 | 0.11 | 0.11 |
| | Highest M.P. | MPa | 0.13 | 0.15 | 0.16 | 0.15 | 0.13 | 0.15 | 0.13 | 0.13 | 0.13 | 0.13 | 0.13 | 0.13 | 0.13 |
| | M.P.R. | MPa | 0.02 | 0.03 | 0.03 | 0.03 | 0.02 | 0.02 | 0.02 | 0.02 | 0.02 | 0.02 | 0.02 | 0.02 | 0.02 |
| | Antistatic property | Ω/□ | $2.6 \times 10^{11}$ | $2.9 \times 10^{11}$ | $2.6 \times 10^{11}$ | $2.4 \times 10^{11}$ | $2.5 \times 10^{11}$ | $3.1 \times 10^{11}$ | $7.5 \times 10^{10}$ | $2.2 \times 10^{11}$ | $2.1 \times 10^{11}$ | $1.6 \times 10^{11}$ | $7.1 \times 10^{10}$ | $5.5 \times 10^{10}$ | $13.1 \times 10^{11}$ |

Ex.: Example
S.M.E.: Storage modulus of elasticity
P by W: Parts by weight
C.M.H.: Crystal melting heat of resin particles
M.P.T.W.: Melting peak temperature width
R.D.S.: Ratio of dimensional shrinkage with respectto mold
Lowest M.P.: Lowest molding pressure
Highest M.P.: Highest molding pressure
M.P.R.: Molding processability range
V: Very good
G: Good

EP 3 269 762 B1

(Comparative Examples 1 through 4)

Polyethylene resin particles, expanded polyethylene resin particles, and in-mold foaming molded products of polyethylene resin were prepared with operations similar to those of Example 1, except that the types and the mixed amounts of linear polyethylene resins in [Preparation of polyethylene resin particles] above were changed as shown in Table 4, and the foaming temperature and the foaming pressure in the first-stage foaming and the internal pressure and the steam pressure in the second-stage foaming in [Preparation of expanded polyethylene resin particles] above were changed as shown in Table 4.

Measurement similar to that of Example 1 was carried out on the obtained polyethylene resin particles, expanded polyethylene resin particles, and in-mold foaming molded products of polyethylene resin. Table 4 shows results of the evaluation.

(Comparative Example 5)

Expanded polyethylene resin particles were prepared with an operation similar to that of Example 1, except that the foaming temperature in first-stage foaming was changed to 130°C in <first-stage foaming> in [Preparation of expanded polyethylene resin particles] above. The obtained first-stage expanded particles were beads which had many wrinkles and were greatly shrunk, and a melting peak on a DSC curve of the expanded particles was one (1).

Although <second-stage foaming> was carried out with an operation similar to that in [Preparation of expanded polyethylene resin particles] in Example 1, the expanded particles did not expand and expanded particles at an intended expanding ratio could not be obtained.

[Table 4]

| | | | Com.Ex.1 | Com.Ex.2 | Com.Ex.3 | Com.Ex.4 | Com.Ex.5 |
|---|---|---|---|---|---|---|---|
| Resin particles | Linear polyethylene resin (A) | Type | (A)-1 | (A)-3 | (C)-1 | (A)-1 | (A)-1 |
| | | PbyW | 100 | 95 | 100 | 50 | 90 |
| | Linear polyethylene resin (B) | Type | None | (B)-1 | None | (B)-1 | (B)-1 |
| | | PbyW | | 5 | | 50 | 10 |
| | Antistatic agent | Type | (a) | (a) | (a) | (a) | (a) |
| | | P by W | 1 | 1 | 1 | 1 | 1 |
| | Glycerin | PbyW | 0.2 | 0.2 | 0.2 | 0.2 | 0.2 |
| | Talc | PbyW | 0.1 | 0.1 | 0.1 | 0.1 | 0.1 |
| | Resin pressure | - | G | G | P | P | G |
| | S.M.E. (1 rad/sec) | Pa | 822 | 602 | 1582 | 5795 | 1831 |
| | S.M.E. (100 rad/sec) | Pa | 71235 | 61346 | 112835 | 128625 | 81999 |
| | MI | g/10min | 2.1 | 3.4 | 1.0 | 0,2 | 1.3 |
| First-stage foaming | Foaming temperature | °C | 120.5 | 120.9 | 122.0 | 124.9 | 130.0 |
| | Foaming pressure | MPa-G | 3.5 | 3.5 | 3.5 | 3.5 | 3.5 |
| | Expanding ratio | Times | 12.2 | 14.2 | 12.2 | 9.6 | 4.3 |
| | Number of melting peaks | - | 2 peaks | 2 peaks | 2 peaks | 2 peaks | 1 peak |
| | DSC ratio | % | 33.1 | 34.8 | 23.2 | 5.5 | 0 |

(continued)

|  |  |  | Com.Ex.1 | Com.Ex.2 | Com.Ex.3 | Com.Ex.4 | Com.Ex.5 |
|---|---|---|---|---|---|---|---|
| Second-stage foaming | Internal pressure | MPa | 0.22 | 0.13 | 0.28 | 0.34 | Not foamed |
|  | Steam pressure | MPa-G | 0.051 | 0.042 | 0.053 | 0.058 |  |
|  | Average cell diameter | $\mu$m | 260 | 230 | 240 | 240 |  |
|  | Open cell ratio | % | 2 | 4 | 2 | 2 |  |
| In-mold foaming molding | Lowest M.P. | MPa-G | 0.11 | 0.10 | 0.12 | 0.15 | Not Evaluated |
|  | Beauty of surface | - | G | G | G | P |  |
|  | R.D.S. | - | G | E | G | P |  |
|  | Open cell ratio (L) | % | 13 | 18 | 10 | 9 |  |
|  | Open cell ratio (H) | % | 23 | 31 | 15 | 13 |  |
|  | Deformation | - | E | P | G | G |  |
|  | Antistatic property | $\Omega/\square$ | $2.4 \times 10^{11}$ | $2.6 \times 10^{11}$ | $2.6 \times 10^{11}$ | $2.9 \times 10^{11}$ |  |

Com.Ex.: Comparative Example
S.M.E: Storage modulus of elasticity
P by W: Parts by weight
Lowest M.P.: Lowest molding pressure
R.D.S.: Ratio of dimensional shrinkage with respectto mold
G: Good
E: Enough
P: Poor

(Comparative Examples 6 through 9)

Polyethylene resin particles, expanded polyethylene resin particles, and in-mold foaming molded products of polyethylene resin were prepared with operations similar to those of Example 15, except that the types and the mixed amounts of the linear polyethylene resins in [Preparation of polyethylene resin particles] above were changed as shown in Table 5, and the foaming temperature and the foaming pressure in the first-stage foaming and the internal pressure and the steam pressure in the second-stage foaming in [Preparation of expanded polyethylene resin particles] above were changed as shown in Table 5.
Measurement similar to that of Example 15 was carried out on the obtained polyethylene resin particles, expanded polyethylene resin particles, and in-mold foaming molded products of polyethylene resin. Table 5 shows results of the evaluation.

[Table 5]

| | | | Com.Ex.6 | Com.Ex.7 | Com.Ex.8 | Com.Ex.9 |
|---|---|---|---|---|---|---|
| Resin particles | Polyethylene resin (A) | Type | (A-5) | (A-4) | (A-6) | (C-2) |
| | | P by W | 100 | 95 | 50 | 100 |
| | Polyethylene resin (B) | Type | None | (B-1) | (B-1) | None |
| | | P by W | | 5 | 50 | |
| | Antistatic agent | Type | (a) | (a) | (a) | (a) |
| | | P by W | 1 | 1 | 1 | 1 |
| | Glycerin | P by W | 0.2 | 02 | 0.2 | 0.2 |
| | Talc | P by W | 0.1 | 0.1 | 0.1 | 0.1 |
| | Resin pressure | - | V | V | P | P |
| | S.M.E. (1 rad/sec) | Pa | 540 | 441 | 5489 | 1602 |
| | S.M.E. (100 rad/sec) | Pa | 67704 | 60531 | 136258 | 108995 |
| | C.M.H. | J/g | 156 | 149 | 168 | 148 |
| | MI of resin particles | g/10min | 2.5 | 3.2 | 0.2 | 1.0 |
| First-stage foaming | Foaming temperature | °C | 122.0 | 121.4 | 126.0 | 122.4 |
| | Foaming pressure | MPa-G | 3.5 | 3.5 | 3.5 | 3.5 |
| | Expanding ratio | Times | 13.5 | 13.8 | 10.7 | 12.7 |
| | M.P.T.W. | °C | 7.1 | 8.7 | 4.9 | 8.3 |
| | DSC ratio | % | 35.1 | 34.6 | 5.3 | 22.7 |
| Second-stage foaming | Internal pressure | MPa | 0.22 | 0.20 | 0.31 | 0.28 |
| | Steam pressure | MPa-G | 0.056 | 0.047 | 0.061 | 0.052 |
| | Average cell diameter | $\mu$m | 240 | 250 | 240 | 230 |
| | Open cell ratio | % | 4 | 4 | 2 | 2 |
| In-mold foaming molding | Beauty of surface | - | E | G | P | G |
| | R.D.S. | - | P | P | E | G |
| | Lowest M.P. | MPa | 0.13 | 0.12 | 0.13 | 0.11 |
| | Highest M.P. | MPa | 0.13 | 0.12 | 0.15 | 0.14 |
| | M.P.R. | MPa | 0.00 | 0.00 | 0.02 | 0.03 |
| | Antistatic property | $\Omega/\square$ | $2.9 \times 10^{11}$ | $2.8 \times 10^{11}$ | $3.2 \times$ | $2.5 \times 10^{11}$ |

Com.Ex.: Comparative Example
S.M.E.: Storage modulus of elasticity
P by W: Parts by weight
C.M.H.: Crystal melting heat of resin particles
M.P.T.W.: Melting peak temperature width
R.D.S.: Ratio of dimensional shrinkage with respect to mold
Lowest M.P.: Lowestmolding pressure
Highest M.P.: Highest molding pressure
M.P.R.: Molding processability range
V: Very good
G: Good
E: Enough
P: Poor

For Examples 1 through 13, the open cell ratio of the obtained molded product was low (i.e., 20% or lower) even in a case where the molded product was obtained at the lowest molding pressure +0.02 MPa, and an increase in open cell ratio of the obtained molded product respect to a molded product, which had been obtained at the lowest molding (steam) pressure, was 6% or lower. Thus, the appropriate foamed molded product was obtained. Moreover, deformation hardly occurred in the foamed molded product. A surface specific resistance was a $10^{11}$ level or less, and thus the antistatic property was achieved. It was thus possible to obtain the foamed molded product having a good antistatic property even in a case where the molding pressure is changed. This makes it possible to improve production stability and to stabilize quality. Further, the resin pressure which is an indicator of productivity in producing resin particles was 8.0 MPa or less, and thus good productivity of resin particles was achieved.

Moreover, for Examples 15 through 26, the resin pressure in producing resin particles was 8.0 MPa or less. Moreover, even in a case where the melting peak temperature width of expanded particles was 11°C or less, that is, even in a case where the melting peak temperature width was narrow, the in-mold foaming molded product having a good appearance was obtained within the molding processability range of 0.02 MPa or more. Moreover, in such a case also, a surface specific resistance was a $10^{11}$ level or less, and thus the antistatic property was achieved.

Further, from comparison between Example 1 and Example 14 and comparison between Example 15 and Example 27, it can be understood that the foaming pressure can be restricted by the presence of glycerin which is a hydrophilic substance.

On the other hand, in a case where the storage modulus of elasticity at an angular frequency of 1 rad/sec is less than 900 Pa as in Comparative Examples 1 and 2, an increase of the open cell ratio of the molded product due to an increase in heating pressure is 10% or more, and it is thus clear that open cell forming is more likely to occur. The foamed molded product obtained at the lowest molding pressure +0.02 MPa is largely deformed, and an appropriate foamed molded product cannot be obtained with a broad range of molding pressures. In Comparative Examples 6 and 7, the melting peak temperature width of expanded particles is 11°C or less and, in a case where the storage modulus of elasticity at an angular frequency of 1 rad/s is less than 900 Pa, the molding processability range is narrow, i.e., MPa or less, and the ratio of dimensional shrinkage is high.

In a case where the storage modulus of elasticity at an angular frequency of 100 rad/sec is more than 100000 Pa as in Comparative Example 3, an appropriate foamed molded product can be obtained with a broad range of heating pressure but the resin pressure in producing resin particles is more than 8.0 MPa. Thus, the productivity is deteriorated. Moreover, in a case where the storage modulus of elasticity at an angular frequency of 100 rad/s is more than 100000 Pa as in Comparative Examples 8 and 9, the molding processability range is 0.02 MPa or more but the resin pressure in producing resin particles is more than 8.0 MPa. Thus, the productivity is deteriorated.

In a case where the storage modulus of elasticity at an angular frequency of 1 rad/sec is more than 5000 Pa as in Comparative Examples 4 and 8, it is possible to obtain a foamed molded product having a low open cell ratio but an appearance and dimensions are deteriorated.

In a case where a peak on the DSC curve of expanded particles is one (1) as in Comparative Example 5, it seems that open-celling in obtained expanded particles leads to many wrinkles and shrinkage, and expanded particles with an intended expanding ratio cannot be obtained even by carrying out the second-stage foaming.

**Claims**

1. Expanded polyethylene resin particles which have a low temperature side melting peak and a high temperature side melting peak on a differential scanning calorie (DSC) curve that is obtained by differential scanning calorimetry in which a temperature is increased from 20°C to 220°C at a heating rate of 10°C/min, wherein:

   said expanded polyethylene resin particles are obtainable by expanding polyethylene resin particles which (i) contain an antistatic agent and an amount of an aliphatic alcohol which amount is 0.001 to 2 parts by weight relative to 100 parts by weight of a polyethylene resin as a base resin of the expanded polyethylene resin particles, (ii) have a storage modulus of elasticity of 900 Pa or more and 5000 Pa or less at an angular frequency of 1 rad/sec in dynamic viscoelastic behavior measurement at 190°C and (iii) have a storage modulus of elasticity of 100000 Pa or less at an angular frequency of 100 rad/sec in dynamic viscoelastic behavior measurement at 190°C; wherein the storage moduli of elasticity are measured as described in the description;
   wherein the base resin of the polyethylene resin particles is a mixed resin of (A) not less than 60% by weight and not more than 97% by weight of a polyethylene resin whose melt index is 1.2 g/10 min or more and 10 g/10 min or less and (B) not less than 3% by weight and not more than 40% by weight of a polyethylene resin whose melt index is 0.01 g/10 min or more and 0.3 g/10 min or less, a total of (A) and (B) being 100% by weight, the melt index being measured in conformity with JIS K7210 at a temperature of 190°C and with a load of 2.16 kg.

2. The expanded polyethylene resin particles as set forth in claim 1, wherein:
a melt index of the polyethylene resin particles is 0.8 g/10 min or more and 3.0 g/10 min or less; the melt index being measured in conformity with JIS K7210 at a load of 2.16 kg and a temperature of 190°C.

3. The expanded polyethylene resin particles as set forth in claim 1 or 2, wherein:
a peak temperature width is 11°C or less, which is a difference in temperature between the low temperature side melting peak and the high temperature side melting peak on the DSC curve.

4. The expanded polyethylene resin particles as set forth in claim 3, wherein:
in a case where a temperature of the polyethylene resin particles is increased from 20°C to 220°C at a heating rate of 10°C/min, then the polyethylene resin particles are cooled to 10°C at a rate of 10°C/min, and subsequently the temperature of the polyethylene resin particles is increased to 220°C for a second time at the heating rate of 10°C/min, the polyethylene resin particles have a crystal melting heat q of 145 J/g or more, which is calculated with use of a differential scanning calorimeter from a DSC curve that is obtained when the temperature is increased for the second time; wherein the crystal melting heat is the total quantity of heat of endothermic obtained from the DSC curve in the second heating.

5. The expanded polyethylene resin particles as set forth in any one of claims 1 through 4, wherein:
the antistatic agent contains at least one selected from the group consisting of a glycerin ester of fatty acid having 6 or more and 24 or less carbon atoms and an aliphatic ethanolamine compound.

6. The expanded polyethylene resin particles as set forth in any one of claims 1 through 5, wherein:
the antistatic agent contains at least one selected from the group consisting of glyceryl stearate, hydroxyalkylethanolamine, stearyl diethanolamine monostearate, and stearyl diethanolamine.

7. The expanded polyethylene resin particles as set forth in any one of claims 1 through 6, wherein:
a content of the antistatic agent is not less than 0.1 parts by weight and not more than 3 parts by weight, relative to 100 parts by weight of a polyethylene resin which is the base resin of the polyethylene resin particles.

8. The expanded polyethylene resin particles as set forth in any one of claims 1 through 7, further comprising:
a hydrophilic compound by not less than 0.01 parts by weight and not more than 10 parts by weight, relative to 100 parts by weight of the base resin.

9. An expanded polyethylene resin molded product which is obtainable by filling a mold with expanded polyethylene resin particles recited in any one of claims 1 through 8 and then carrying out in-mold foaming molding.

10. A method for producing expanded polyethylene resin particles recited in any one of claims 1 through 8, comprising:
a first-stage foaming step in which polyethylene resin particles, a foaming agent, and an aqueous dispersion medium are dispersed, then a resultant mixture is heated in a sealed container up to a temperature that is equal to or higher than a softening temperature of the polyethylene resin particles, then a pressure is applied to the resultant mixture, then the resultant mixture is released into a zone whose pressure is lower than an internal pressure of the sealed container, and thus the expanded polyethylene resin particles are produced.

11. The method as set forth in claim 10, wherein the foaming agent is an inorganic gas and/or water.

12. The method as set forth in claim 11, wherein the inorganic gas is a carbonic acid gas.

13. A method for producing an expanded polyethylene resin molded product, wherein:
the expanded polyethylene resin molded product is obtained by (i) filling a molding space, which is made up of two molds and can be closed but cannot be sealed, with expanded polyethylene resin particles recited in any one of claims 1 through 8 without carrying out pretreatment on the expanded polyethylene resin particles in advance and then (ii) heating the expanded polyethylene resin particles by a heating medium.

**Patentansprüche**

1. Expandierte Polyethylenharz-Teilchen, die einen Schmelzpeak auf der Niedertemperaturseite und einen Schmelzpeak auf der Hochtemperaturseite auf einer Differentialscanningkalorie (DSK)-Kurve aufweisen, die durch Differentialscanningkalorimetrie erhalten wird, bei der eine Temperatur bei einer Erwärmungsrate von 10°C/min von 20°C auf 220°C erhöht wird, wobei:

die expandierten Polyethylenharz-Teilchen erhältlich sind durch Expandieren von Polyethylenharz-Teilchen, die (i) ein Antistatikum und eine Menge eines aliphatischen Alkohols enthalten, wobei die Menge 0,001 bis 2 Gewichtsteile, bezogen auf 100 Gewichtsteile eines Polyethylenharzes als Basisharz der expandierten Polyethylenharz-Teilchen, beträgt, (ii) einen Speicherelastizitätsmodul von 900 Pa oder mehr und 5000 Pa oder weniger bei einer Kreisfrequenz von 1 rad/s in einer dynamischen Viskoelastizitätsverhaltensmessung bei 190°C aufweisen und (iii) einen Speicherelastizitätsmodul von 100000 Pa oder weniger bei einer Kreisfrequenz von 100 rad/s in einer dynamischen Viskoelastizitätsverhaltensmessung bei 190°C aufweisen;
wobei die Speicherelastizitätsmoduli wie in der Beschreibung beschrieben gemessen werden;
wobei das Basisharz der Polyethylenharz-Teilchen ein Harzgemisch aus (A) nicht weniger als 60 Gew.-% und nicht mehr als 97 Gew.-% eines Polyethylenharzes, dessen Schmelzindex 1,2 g/10 min oder mehr und 10 g/10 min oder weniger beträgt, und (B) nicht weniger als 3 Gew.-% und nicht mehr als 40 Gew.-% eines Polyethylenharzes, dessen Schmelzindex 0,01 g/10 min oder mehr und 0,3 g/10 min oder weniger beträgt, ist, wobei eine Gesamtheit von (A) und (B) 100 Gew.-% beträgt, wobei der Schmelzindex gemäß JIS K7210 bei einer Temperatur von 190°C und mit einer Last von 2,16 kg gemessen wird.

2. Die expandierten Polyethylenharz-Teilchen nach Anspruch 1, wobei:
ein Schmelzindex der Polyethylenharz-Teilchen 0,8 g/10 min oder mehr und 3,0 g/10 min oder weniger beträgt;
wobei der Schmelzindex gemäß JIS K7210 bei einer Last von 2,16 kg und einer Temperatur von 190°C gemessen wird.

3. Die expandierten Polyethylenharz-Teilchen nach Anspruch 1 oder 2, wobei:
eine Peaktemperatur-Breite 11°C oder weniger beträgt, was ein Temperaturunterschied zwischen dem Schmelzpeak auf der Niedertemperaturseite und dem Schmelzpeak auf der Hochtemperaturseite auf der DSK-Kurve ist.

4. Die expandierten Polyethylenharz-Teilchen nach Anspruch 3, wobei:
in einem Fall, wenn eine Temperatur der Polyethylenharz-Teilchen bei einer Erwärmungsrate von 10°C/min von 20°C auf 220°C erhöht wird, dann die Polyethylenharz-Teilchen bei einer Rate von 10°C/min auf 10°C herabgekühlt werden und anschließend die Temperatur der Polyethylenharz-Teilchen ein zweites Mal bei der Erwärmungsrate von 10°C/min auf 220°C erhöht wird, die Polyethylenharz-Teilchen eine Kristallschmelzwärme q von 145 J/g oder mehr aufweisen, die unter Verwendung eines Differentialscanningkalorimeters aus einer DSK-Kurve berechnet wird, die erhalten wird, wenn die Temperatur das zweite Mal erhöht wird; wobei die Kristallschmelzwärme die gesamte endotherme Wärmemenge ist, die anhand der DSK-Kurve bei der zweiten Erwärmung erhalten wird.

5. Die expandierten Polyethylenharz-Teilchen nach einem der Ansprüche 1 bis 4, wobei:
das Antistatikum mindestens eines, ausgewählt aus der Gruppe bestehend aus einem Fettsäureglycerinester mit 6 oder mehr und 24 oder weniger Kohlenstoffatomen und einer aliphatischen Ethanolamin-Verbindung, enthält.

6. Die expandierten Polyethylenharz-Teilchen nach einem der Ansprüche 1 bis 5, wobei:
das Antistatikum mindestens eines, ausgewählt aus der Gruppe bestehend aus Glycerylstearat, Hydroxyalkylethanolamin, Stearyldiethanolaminmonostearat und Stearyldiethanolamin, enthält.

7. Die expandierten Polyethylenharz-Teilchen nach einem der Ansprüche 1 bis 6, wobei:
ein Gehalt des Antistatikums nicht weniger als 0,1 Gewichtsteile und nicht mehr als 3 Gewichtsteile, bezogen auf 100 Gewichtsteile eines Polyethylenharzes, bei dem es sich um das Basisharz der Poylethylenharz-Teilchen handelt, beträgt.

8. Die expandierten Polyethylenharz-Teilchen nach einem der Ansprüche 1 bis 7, weiter umfassend:
eine hydrophile Verbindung mit nicht weniger als 0,01 Gewichtsteile und nicht mehr als 10 Gewichtsteile, bezogen auf 100 Gewichtsteile des Basisharzes.

9. Ein Formprodukt aus expandiertem Polyethylenharz, welches erhältlich ist durch Füllen einer Form mit expandierten Polyethylenharz-Teilchen nach einem der Ansprüche 1 bis 8 und dann Durchführen einer schäumenden Formgebung in der Form.

10. Ein Verfahren zur Herstellung expandierter Polyethylenharz-Teilchen nach einem der Ansprüche 1 bis 8, umfassend:

einen Schäumungsschritt der ersten Stufe, bei dem Polyethylenharz-Teilchen, ein Schaumbildner und ein wässriges Dispersionsmedium dispergiert werden, dann ein resultierendes Gemisch in einem verschlossenen Behälter auf eine Temperatur erwärmt wird, die gleich oder höher als eine Erweichungstemperatur der Polyethylenharz-Teilchen ist, dann ein Druck auf das resultierende Gemisch aufgebracht wird, dann das resultierende Gemisch in einen Bereich abgelassen wird, dessen Druck niedriger ist als ein Innendruck des verschlossenen Behälters, und somit die expandierten Polyethylenharz-Teilchen hergestellt werden.

**11.** Das Verfahren nach Anspruch 10, wobei der Schaumbildner ein anorganisches Gas und/oder Wasser ist.

**12.** Das Verfahren nach Anspruch 11, wobei das anorganische Gas ein Kohlensäuregas ist.

**13.** Ein Verfahren zur Herstellung eines Formprodukts aus expandiertem Polyethylenharz, wobei:
das Formprodukt aus expandiertem Polyethylenharz erhalten wird durch (i) Füllen eines Formhohlraums, der von zwei Formen gebildet wird und geschlossen, jedoch nicht verschlossen werden kann, mit expandierten Polyethylenharz-Teilchen nach einem der Ansprüche 1 bis 8 ohne vorheriges Durchführen einer Vorbehandlung an den expandierten Polyethylenharz-Teilchen und dann (ii) Erwärmen der expandierten Polyethylenharz-Teilchen mit Hilfe eines Heizmediums.

## Revendications

**1.** Particules de résine de polyéthylène expansé qui ont un pic de fusion du côté des basses températures et un pic de fusion du côté des températures élevées sur une courbe de calorimétrie (calorie) à balayage différentiel (DSC) qui est obtenue par calorimétrie à balayage différentiel dans laquelle une température est augmentée de 20 °C à 220 °C à une vitesse de chauffage de 10 °C/min, dans lesquelles :

lesdites particules de résine de polyéthylène expansé peuvent être obtenues par expansion de particules de résine de polyéthylène qui (i) contiennent un agent antistatique et une certaine quantité d'un alcool aliphatique, laquelle quantité est de 0,001 à 2 parties en poids pour 100 parties en poids d'une résine de polyéthylène servant de résine de base des particules de résine de polyéthylène expansé, (ii) ont un module d'élasticité au stockage de 900 Pa ou plus et de 5000 Pa ou moins à une fréquence angulaire de 1 rad/s dans une mesure de comportement viscoélastique dynamique à 190 °C et (iii) ont un module d'élasticité au stockage de 100 000 Pa ou moins à une fréquence angulaire de 100 rad/s dans une mesure de comportement viscoélastique dynamique à 190 °C ; dans lesquelles les modules d'élasticité au stockage sont mesurées comme décrit dans la description ;
dans lesquelles la résine de base des particules de résine de polyéthylène est une résine mixte de (A) au moins 60 % en poids et au plus 97 % en poids d'une résine de polyéthylène dont l'indice de fluage est de 1,2 g/10 min ou plus et de 10 g/10 min ou moins et (B) au moins 3 % en poids et au plus 40 % en poids d'une résine de polyéthylène dont l'indice de fluage (fusion) est de 0,01 g/10 min ou plus et de 0,3 g/10 min ou moins, un total de (A) et (B) étant de 100 % en poids, l'indice de fluage étant mesuré conformément à la norme JIS K7210 à une température de 190 °C et sous une charge de 2,16 kg.

**2.** Particules de résine de polyéthylène expansé selon la revendication 1, dans lesquelles l'indice de fluage des particules de résine de polyéthylène est de 0,8 g/10 min ou plus et de 3,0 g/10 min ou moins ; l'indice de fluage étant mesuré conformément à la norme JIS K7210 sous une charge de 2,16 kg et à une température de 190 °C.

**3.** Particules de résine de polyéthylène expansé selon la revendication 1 ou 2, dans lesquelles la largeur de température de pic est de 11 °C ou moins, ce qui représente la différence de température entre le pic de fusion du côté des basses températures et le pic de fusion du côté des températures élevées sur la courbe de DSC.

**4.** Particules de résine de polyéthylène expansé selon la revendication 3, dans lesquelles, dans le cas où la température des particules de résine de polyéthylène est augmentée de 20 °C à 220 °C à une vitesse de chauffage de 10 °C/min, après quoi les particules de résine de polyéthylène sont refroidies à 10 °C à une vitesse de 10 °C/min, et ensuite la température des particules de résine de polyéthylène est augmentée à 220 °C une deuxième fois à une vitesse de chauffage de 10 °C/min, les particules de résine de polyéthylène ont une chaleur de fusion cristalline q de 145 J/g ou plus, laquelle est calculée par utilisation d'un calorimètre à balayage différentiel à partir d'une courbe de DSC qui est obtenue quand la température est augmentée la deuxième fois ; dans lesquelles la chaleur de fusion cristalline est la quantité totale de chaleur endothermique obtenue à partir de la courbe de DSC lors du deuxième chauffage.

5. Particules de résine de polyéthylène expansé selon l'une quelconque des revendications 1 à 4, dans lesquelles l'agent antistatique contient au moins l'un choisi dans le groupe constitué par un ester de glycérine d'acide gras ayant 6 atomes de carbone ou plus et 24 atomes de carbone ou moins et un composé éthanolamine aliphatique.

6. Particules de résine de polyéthylène expansé selon l'une quelconque des revendications 1 à 5, dans lesquelles : l'agent antistatique contient au moins l'un choisi dans le groupe constitué par le stéarate de glycéryle, une hydroxyalkyléthanolamine, le monostéarate de stéaryl-diéthanolamine, et la stéaryl-diéthanolamine.

7. Particules de résine de polyéthylène expansé selon l'une quelconque des revendications 1 à 6, dans lesquelles : une teneur en l'agent antistatique est d'au moins 0,1 partie en poids et d'au plus 3 parties en poids, pour 100 parties en poids d'une résine de polyéthylène qui est la résine de base des particules de résine de polyéthylène.

8. Particules de résine de polyéthylène expansé selon l'une quelconque des revendications 1 à 7, comprenant en outre : un composé hydrophile à raison d'au moins 0,01 partie en poids et d'au plus 10 parties en poids pour 100 parties en poids de la résine de base.

9. Produit moulé en résine de polyéthylène expansé qui peut être obtenu par remplissage d'un moule avec les particules de résine de polyéthylène expansé définies dans l'une quelconque des revendications 1 à 8 et ensuite mise en œuvre d'un moulage par expansion dans le moule.

10. Méthode pour produire des particules de résine de polyéthylène expansé définies dans l'une quelconque des revendications 1 à 8, comprenant :
une étape d'expansion de premier étage dans laquelle des particules de résine de polyéthylène, un agent d'expansion, et un milieu de dispersion aqueux sont dispersés, ensuite le mélange résultant est chauffé dans un récipient scellé jusqu'à une température égale ou supérieure au point de ramollissement des particules de résine de polyéthylène, ensuite une pression est appliquée au mélange résultant, ensuite le mélange résultant est libéré dans une zone dont la pression est inférieure à la pression interne du récipient scellé, et ainsi les particules de résine de polyéthylène expansé sont produites.

11. Méthode selon la revendication 10, dans laquelle l'agent d'expansion est un gaz inorganique et/ou l'eau.

12. Méthode selon la revendication 11, dans laquelle le gaz inorganique est un acide carbonique gazeux.

13. Méthode pour produire un produit moulé en résine de polyéthylène expansé, dans laquelle :
le produit moulé en résine de polyéthylène expansé est obtenu par (i) remplissage d'un espace de moulage, qui est constitué de deux moules et qui peut être fermé mais pas scellé, avec des particules de résine de polyéthylène expansé définies dans l'une quelconque des revendications 1 à 8 sans mise en œuvre d'un prétraitement sur les particules de résine de polyéthylène expansé à l'avance, et ensuite (ii) chauffage des particules de résine de polyéthylène expansé au moyen d'un milieu chauffant.

## FIG. 1

## FIG. 2

FIG. 3

SHORTER SIDE DIRECTION

$D_E$ MEASUREMENT LOCATION

$D_1$ MEASUREMENT LOCATION

50mm

50mm

LONGER SIDE DIRECTION

THICKNESS DIRECTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3067106 A
- JP 1696651 A
- JP 6086544 A
- JP 2017449 A
- JP 9025356 A
- JP 6157803 A
- JP 6316645 A
- JP 2000017079 A
- JP 2010059393 A

- JP 7216153 A
- JP 9104026 A
- JP 2011086937 A
- JP 2013011951 A
- JP 6001874 A
- WO 2015076306 A1
- JP 2014141551 A
- EP 2733164 A1